(19) Europäisches Patentamt
European Patent Office
Office européen des brevets

(11) Veröffentlichungsnummer: **0 022 209**
**B1**

# (12) EUROPÄISCHE PATENTSCHRIFT

(45) Veröffentlichungstag der Patentschrift: **17.04.85**

(51) Int. Cl.[4]: **C 09 B 62/04,** D 06 P 3/66, D 06 P 1/382, D 06 P 3/84

(21) Anmeldenummer: **80103524.7**

(22) Anmeldetag: **24.06.80**

(54) **Fluortriazinylfarbstoffe sowie deren Verwendung zum Färben von cellulosehaltigen Fasermaterialien.**

(30) Priorität: **07.07.79 DE 2927520**

(43) Veröffentlichungstag der Anmeldung: **14.01.81 Patentblatt 81/2**

(45) Bekanntmachung des Hinweises auf die Patenterteilung: **17.04.85 Patentblatt 85/16**

(84) Benannte Vertragsstaaten: **CH DE FR GB IT LI**

(56) Entgegenhaltungen:
**CH - A - 390 411**
**DE - A - 2 425 283**
**DE - B - 1 146 064**
**FR - A - 2 366 405**
**GB - A - 951 667**

**CHEMICAL ABSTRACTS, Band 84, Nr. 22, 31. Mai 1976, Seite 95, Nr. 152226a Columbus, Ohio, U.S.A.**

(73) Patentinhaber: **BAYER AG, Konzernverwaltung RP Patentabteilung, D-5090 Leverkusen 1 Bayerwerk (DE)**

(72) Erfinder: **Harms, Wolfgang, Dr., Walter-Flex-Strasse 21, D-5090 Leverkusen (DE)**
Erfinder: **Kuth, Robert, Dr., Veit-Stoss-Strasse 12, D-5000 Köln 41 (DE)**
Erfinder: **Wunderlich, Klaus, Dr., Carl-Rumpff-Strasse 21, D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 022 209 B1

**Beschreibung**

Gegenstand der vorliegenden Erfindung sind Reaktivfarbstoffe der Formel

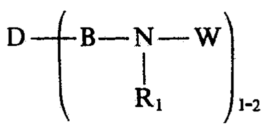 (I)

mit

D = Rest eines von anionischen Gruppen freien organischen Farbstoffen, der frei von basischen Gruppen ist,
B = direkte Bindung zu einem Ring-C-Atom von D,
$R_1$ = H, $CH_3$,
W = Fluortriazinylrest mit einer der folgenden Gruppen der Formeln

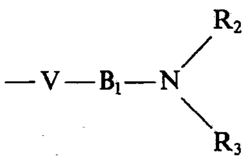 (III)

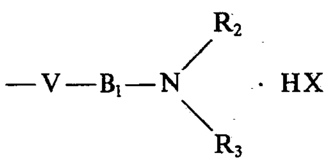 (IIIa)

und

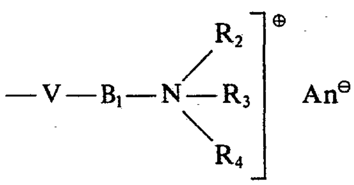 (IV)

mit

V = 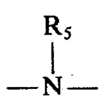 —O— —S—
oder direkte Bindung,
$B_1$ = Brückenglied, insbesondere $C_2$—$C_8$-Alkylen, gegebenenfalls durch Heteroatome, insbesondere —O— unterbrochen, Aralkylen, Alkarylen,
$R_2$—$R_5$ = H, Alkyl, wobei $R_2$ und $R_5$ zusammen durch Alkylen bedeuten können,
$An^{\ominus}$ = Anion,
HX = organische oder anorganische Säure.

Gegenstand der Erfindung sind weiterhin Reaktivfarbstoffe der Formel

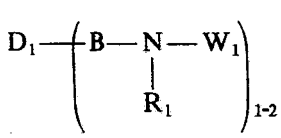 (II)

mit

$D_1$ = Rest eines von anionischen Gruppen freien organischen Farbstoffs mit einer der folgenden Gruppen der Formeln

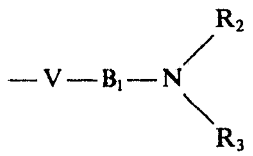

(VI)

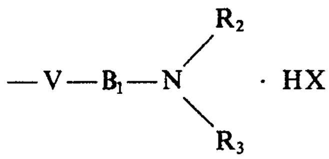

(VI a)

und

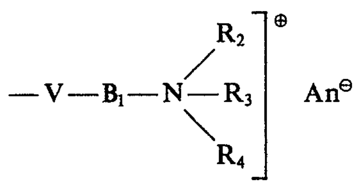

(VII)

mit

V = 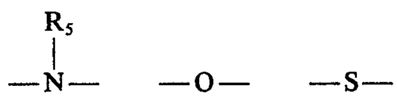

oder direkte Bindung,

| | | |
|---|---|---|
| $B_1$ | = | Brückenglied, insbesondere $AC_2$—$C_8$-Alkylen, gegebenenfalls durch Heteroatome, insbesondere —O— unterbrochen, Aralkylen, Alkarylen, |
| $R_2$—$R_5$ | = | H, Alkyl, wobei $R_2$ und $R_5$ zusammen auch Alkylen bedeuten können, |
| $An^{\ominus}$ | = | Anion, |
| HX | = | organische oder anorganische Säure, |
| $R_1$ | = | H, $CH_3$, |
| $W_1$ | = | Fluortriazinylrest, der frei von basischen Gruppen ist, |
| B | = | direkte Bindung zu einem Ring-C-Atom von $D_1$. |

Die Farbstoffe der Formel (I) und (II) sind jeweils von anionischen Gruppen frei und insbesondere von Sulfo- und Carboxygruppen frei. Sie enthalten zwingend die basischen Gruppen (III), (III a), (IV) bzw. (VI), (VI a) und (VII) und verwirklichen eine einzige erfinderische Idee. Beide Typen (I) und (II) sind in hervorragender Weise für das Ton-in-Ton-Färben von Mischfasern geeignet.

Geeignete Reste $W_1$ sind solche der Formel

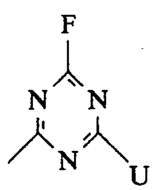

(V)

mit

U = Rest eines Alkohols, Thiols oder ein Alkyl-, Aryl- oder Aralkylrest, insbesondere $-OR_8$, $-SR_8$, $R_8$ = H, Alkyl, Aralkyl, Aryl.

Bevorzugte Reste W sind insbesondere Fluortriazinylreste mit einem Rest

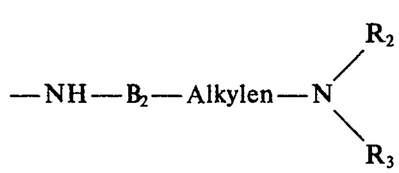

(VI)

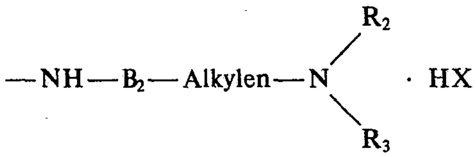

(VIa)

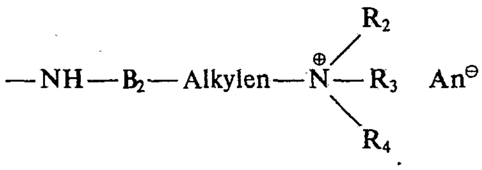

(VII)

mit

$B_2$ = direkte Bindung, –Phenylen, Phenylen–O–,
Alkylen = $C_2$–$C_8$-Alkylen.

Geeignete Anionen $An^{\ominus}$ sind insbesondere solche von leicht flüchtigen anorganischen Säuren wie Halogenwasserstoffsäuren, organischen Säuren wie Ameisensäure, Essigsäure, Propionsäure, Chloressigsäure, Acrylsäure, Oxalsäure.

Geeignete Säuren HX sind beispielsweise die oben genannten. Vorzugsweise kommen die folgenden in Frage: Essigsäure, Ameisensäure, Propionsäure, Salzsäure.

Geeignete Farbstoffe sind beispielsweise Azo-, Anthrachinon-, Phthalocyanin-, Chinophthalon-, Phthaloperinon-, Nitro- und Formazanfarbstoffe.

Die Alkyl-, Alkoxy-, Aryl- und Aralkylreste können ganz generell gegebenenfalls weitere übliche Substituenten aufweisen. Bevorzugtes Alkyl und Alkoxy enthält 1–4 C-Atome, bevorzugtes Aryl ist gegebenenfalls subsitituiertes Phenyl, bevorzugtes Arylen gegebenenfalls substituiertes Phenylen.

Die Farbstoffe sind nach verschiedenen Verfahren erhältlich:

1) Umsetzung von Difluortriazinylfarbstoffen

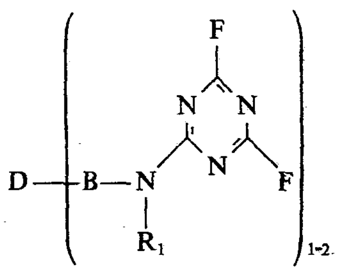

(VIII)

mit Verbindungen, die eine basische Gruppe und zusätzlich ein mit Halogen reaktionsfähiges H-Atom enthalten, nämlich Verbindungen der Formel

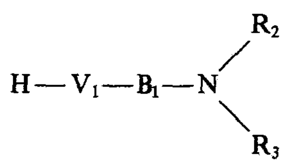

(IX)

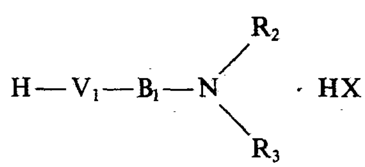

(X)

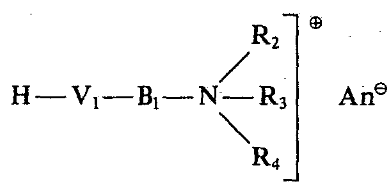

(XI)

mit $V_1$ = 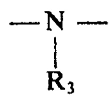 $-O-$ oder $-S-$

wobei im Falle der Verwendung von IX oder X ein Quaternierungsschritt zur Einführung von $R_4$ angeschlossen werden kann und im Falle der Verwendung von IX eine Salzbildung mit HX.

Geeignete Verbindungen IX–XI sind beispielsweise:

1-Amino-2-dimethylaminoäthan, 1-Amino-2-diäthylaminoäthan, 1-Amino-2-N-methyl-N-propylaminoäthan, 1-Amino-2-dipropylaminoäthan, 1-Amino-2-dibutylaminoäthan, 1-Amino-2-diisobutylaminoäthan, 1-Methyl-2-dimethylaminoäthan, 1-Methylamino-2-diäthylaminoäthan, 1-Äthylamino-2-diäthylaminoäthan, 1-Propylamino-2-diäthylaminoäthan, 1-Butylamino-2-diäthylaminoäthan, 1-Methylamino-2-dibutylaminoäthan,
1-Amino-3-dimethylaminopropan, 1-Amino-3-diäthylaminopropan, 1-Amino-3-dipropylaminopropan,
1-Amino-3-dibutylaminopropan, 1-Methylamino-3-diäthylaminopropan, 1-Methylamino-3-dipropylaminopropan, 1-Amino-3-N-methyl-N-isopropylaminopropan, 1-Amino-3-N-methyl-N-isobutylaminopropan, 1-Amino-3-diisobutylaminopropan, 2-Amino-1-diäthylaminopropan, 1-Amino-3-dimethylaminobutan, 1-Dimethylamino-3-methylaminobutan, 3-Amino-1-diäthylaminobutan, 1-Amino-4-dimethylaminobutan, 1-Methylamino-4-dimethylaminobutan, 1-Amino-4-N-methyl-N-äthylaminobutan, 1-Methylamino-4-diäthylaminobutan, 1-Amino-2-dimethylamino-2-methylpropan, 1-Amino-5-dimethylaminopentan, 1-Amino-5-diäthylaminopentan, 1-Amino-6-diäthylaminohexan, Bis-(2-Diäthylamino-1-propyl)-amin, N-Methylpiperazin,
N-Methyl-N'-(β-aminoäthyl)-piperazin, 2-, 3-, 4-Aminobenzyl-dimethylamin, 2-, 4-(β-Diäthylaminoäthoxy)-anilin, 2-, 4-(β-Dimethylaminoäthoxy)-anilin, 2-, 3-, 4-Amino-N,N-dimethylanilin, 1-Amino-2-(2-dimethylaminoäthoxy)-äthan, 2-Dimethylaminoäthanol, 2-Diäthylaminoäthanol, 2-(2-Dimethylaminoäthoxy)-äthanol, 3-Dimethylamino-1-propanol, 1-Dimethylamino-2-propanol, 1-Diäthylamino-2-propanol, 1,3-Bis-(dimethylamino)-2-propanol, 3-, 4-Dimethylaminomethylphenol.

Geeignete Quartenierungsmittel sind beispielsweise:

Dimethylsulfat, Diäthylsulfat, Toluolsulfonsäuremethylester, Toluolsulfonsäureäthylester, Methylchlorid, Methylbromid und ähnliche.

2) Umsetzung von Farbstoffen der Formel

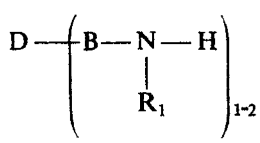

(XII)

mit Fluortriazinen

$F-W$ (XIII)

die ihrerseits aus Trifluortriazinen und 1 Mol IX, X oder XI erhalten werden.

3) Umsetzung von Farbstoffen der Formel

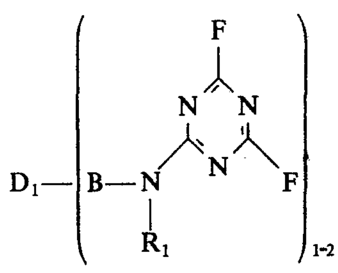

(XIV)

mit 1 Mol pro Cyanurhalogenidrest einer Verbindung

$H-U$ (XV)

4) Umsetzung von Farbstoffen der Formel

$$D_1 \left( B - \underset{\displaystyle R_1}{\underset{|}{N}} - H \right)_{1\text{-}2} \qquad (XVI)$$

mit

$$F - W_1 \qquad (XVII)$$

wobei XVII seinerseits aus 1 Mol Trifluortriazin und 1 Mol einer Verbindung

$$H - U \qquad (XV)$$

erhalten wird.

Geeignete Farbstoffe XII bzw. XVI sind beispielsweise

1-Amino-anthrachinon, 1,4-Diamino-anthrachinon, 1,5-Diamino-anthrachinon, 1,8-Diamino-anthrachinon, 1-Amino-4-benzoylamino-anthrachinon, 1-Amino-5-benzoylamino-anthrachinon, 1-Amino-5-acetylamino-anthrachinon, 1-Amino-8-benzoylamino-anthrachinon, 1-Amino-4-methylamino-anthrachinon, 1-Amino-4-äthylamino-anthrachinon, 1-Amino-4-isopropylamino-anthrachinon, 1-Amino-4-cyclohexylamino-anthrachinon, 1-Amino-4-(4'-methylphenylamino)-anthrachinon, 1-Amino-4-(4'-methoxyphenylamino)-anthrachinon, 1-Amino-4-acetylamino-anthrachinon, 1-Amino-4-phenylamino-anthrachinon, 1-Amino-4-(3'-aminophenylamino)-anthrachinon, 1-Amino-4-(4'-aminophenylamino)-anthrachinon, 1-(3'-Aminophenylamino)-anthrachinon, 1-(4'-Aminophenylamino)-anthrachinon, 1-Methylamino-4-(3'-aminophenylamino)-anthrachinon, 1-Methylamino-4-(4'-aminophenylamino)-anthrachinon, 1-Äthylamino-4-(3'-aminophenylamino)-anthrachinon, 1-Isopropylamino-4-(3'-aminophenylamino)-anthrachinon, 1-Isopropylamino-4-(4'-aminophenylamino)-anthrachinon, 1-sec.Butylamino-4-(3'-aminophenylamino)-anthrachinon, 1-n-Butylamino-4-(4'-aminophenylamino)-anthrachinon, 1-Isobutylamino-4-(3'- aminophenylamino)-anthrachinon, 1-Isobutylamino-4-(4'-methylamino-anilino)-anthrachinon, 1-Methylamino-4-(3'-aminomethyl-4'-methylphenylamino)-anthrachinon, 1-Isopropylamino-4-(3'-methylaminomethyl-4'-methoxy-phenylamino)-anthrachinon, 1-Äthylamino-4-(4'-methylaminomethyl-phenylamino)-anthrachinon, 1-Cyclohexylamino-4-(3'-aminophenylamino)-anthrachinon, 1-Amino-4-hydroxy-anthrachinon, 1-Amino-4-methoxy-anthrachinon, 1-Amino-4-(β-methoxyäthoxy)-anthrachinon, 1,4-Diamino-2-phenoxy-anthrachinon, 1,4-Diamino-2-methoxy-anthrachinon, 1,4-Diamino-2-(β-methoxyäthoxy)-anthrachinon, 1,4-Diamino-2-brom-anthrachinon, 1,4-Di-amino-2-chlor-anthrachinon, 1,4-Diamino-2-methyl-anthrachinon, 1,4-Diamino-2-nitro-anthrachinon, 1,4-Diamino-2-cyan-anthrachinon, 1,4-Diamino-2-acetylanthrachinon, 1,4-Diamino-2-formyl-anthrachinon, 1,4-Diamino-2-sulfophenoxy-anthrachinon, 1,4-Diamino-2-methylsulfonyl-anthrachinon, 1,4-Diamino-anthrachinon-2-carbonsäuremethylester, 5-Amino-thiazolanthron, 1,4-Diamino-2-(4'-aminophenoxy)-anthrachinon, 1,4-Diamino-2-(3'-aminophenoxy)-anthrachinon, 1,4-Diamino-2-sulfo-(3'-aminophenoxy)-anthrachinon, 1,4-Diamino-5-nitro-anthrachinon, 1-Amino-4-hydroxy-2-(4'-aminophenoxy)-anthrachinon, 1-Amino-4-hydroxy-2-(3'-aminophenoxy)-anthrachinon, 1-Amino-4-hydroxy-2-[β-(4'- aminophenoxy)-äthoxy]-anthrachinon, 1-Amino-4-hydroxy-2-[β-(phenylamino)-äthoxy]-anthrachinon, 1-Amino-4-hydroxy-2-(4'-aminomethyl-phenoxy)-anthrachinon, 1-(4'-Amino-phenylamino)-4-hydroxy-anthrachinon, 1-(3'-Amino-phenylamino)-4-hydroxy-anthrachinon, 3,4-Phthalo-2-amino-acridon, 1,5-Diamino-4,8-dihydroxy-anthrachinon, 1,8-Diamino-4,5-dihydroxy-anthrachinon, 1-Amino-4,8-dihydroxy-5-(4'-methylphenylamino)-anthrachinon, 1-Amino-4,5-dihydroxy-8-(4'-methylphenylamino)-anthrachinon, 1-Amino-4,8-dihydroxy-5-phenylamino-anthrachinon, 1-Amino-4,5-dihydroxy-8-(4'-methoxyphenylamino)-anthrachinon, 1-Amino-4,8-dihydroxy-5-isopropylamino-anthrachinon, 1-Amino-4,5-dihydroxy-8-isopropylamino-anthrachinon, 1-Amino-4,8-dihydroxy-5-methylamino-anthrachinon, 1-Amino-4,5-dihydroxy-8-methylamino-anthrachinon, 1-Amino-5-methylamino-anthrachinon, 1-Amino-5-isopropylamino-anthrachinon, 5-Amino-1,4-bis-(4'-methylphenylamino)-anthrachinon, 5-Amino-1,4-bis-isopropylamino-anthrachinon, 1-Amino-4-chlor-5,8-bis-isopropylamino-anthrachinon, 1-Amino-4-chlor-5,8-bis-(4'-methylphenylamino)-anthrachinon, 1-Amino-5-methoxy-anthrachinon, 1-Amino-8-methoxy-anthrachinon, 1-Amino-5-(β-methoxyäthoxy)-anthrachinon, 1-Amino-5-nitro-anthrachinon, 1-Amino-8-nitro-anthrachinon, 1-Amino-6/7-nitro-anthrachinon-Isomerengemisch, 1,4-Diamino-anthrachinon-2,3-dicarbonsäure-(3'-aminophenylimid), 1-(β-Aminoäthylamino)-4-(4'-methylphenylamino)-anthrachinon, 1-Amino-4-(3'-aminophenylamino)-2-methoxy-anthrachinon, 1-Amino-4-(4'-aminophenylamino)-2-phenoxy-anthrachinon, 1-Amino-4-(4'-methylaminomethyl-phenylamino)-2-phenoxy-anthrachinon, 1-Amino-2-methoxy-4-(4'-methylaminomethyl-phenylamino)-anthrachinon, 5-Amino-1,4-bis-phenylmercapto-anthrachinon, 1-Amino4-(3-dimethylamino-1-propylamino)-anthrachinon, 5-Amino-1,4-bis-(3-dime-thylamino-1-propylamino)-anthrachinon, 1-Amino-4-(4'-dimethylaminomethyl-phenylamino)-anthrachinon, 1-Amino-4-(3'-dimethylaminomethyl-phenylamino)-anthrachinon, 1-Amino-4-(4'-diäthylamino-methyl-phenylamino)-anthrachinon, 1-Amino-4-(4'-β-diäthylaminoäthoxy-phenylamino-anthrachinon, 1-Amino-4-(2'-β-dimethylamino-äthoxy-phenylamino)-anthrachinon, 5-Amino-1,4-bis-(4'-β-diäthylaminoäthoxy-phenylamino)-anthrachinon, 5-Amino-1,4-bis-(4'-dimethylaminomethyl-phenylamino)-anthrachinon, 5-Amino-1,4-bis-(3'-dimethylaminomethylphenylamino)-anthrachinon, 1-Amino-4-(2'-dimethylaminomethyl-phenylamino)-anthrachinon, 4'-Amino-3-nitro-diphenylamin-1-sulfonsäure-N,N-dimethylamid, 4'-Amino-3-nitro-diphenylamin-1-sulfonsäure-N-methylamid, 4'-Amino-3-nitrodiphenylamin-1-sulfonsäure-N-äthylamid, 3'-Amino-3-nitrodiphenylamin-1-sulfonsäure-N-hydroxyäthylamid, 4'-Amino-3-nitrodiphenylamin-1-sulfonsäure-N-phenylamid, 4'-Amino-3-nitrodiphenylamin-1-sulfonsäure-N-methylanilid, 4'-Amino-3-nitro-1-methylsulfonyl-diphenylamin, 4'-Amino-3-nitro-1-äthylsulfonyl-diphenylamin, 3-Nitro-diphenylamin-1-sulfonsäure-N-(4"- amino-phenylamid), 4'-Methyl-3-nitrodiphenylamino-1-sulfonsäure-N-(3"-aminophenylamid), 4'-Methoxy-3-nitrodiphenylamin-1-sulfonsäure-N-(β-aminoäthylamid), 3-Nitro-diphenylamin-1-sulfonsäure-N-(β-aminoäthylamid), 3-Nitro-4'-methoxy-diphenylamin-1-sulfonsäure-N-(4"- aminophenylamid), 3-Nitro-4'-methoxy-diphenylamin-1-sulfonsäure-N-(3"-aminophenylamid), 3-Nitro-2'-methoxy-diphenylamin-1-sulfonsäure-N-(4"-aminophenylamid), 3-Nitro-4'-acetylamino-diphenylamin-1-sulfonsäure-(4"-aminophenylamid), 3-Nitro-4'-acetylamino-diphenylamin-1-sulfonsäure-N-(β-aminoäthylamid).

Geeignete Verbindung XV sind beispielsweise:

Phenol, 2-, 3-, 4-Methylphenol, 2-, 3-, 4-Chlorphenol, 2-, 3-, 4-Äthylphenol, 2,3-Dimethylphenol, 3,4-, 2,4-, 3,5-, 2,5-Dimethylphenol, 2,3,5-Trimethylphenol, 2-tert.Butylphenol, 4-tert.Butylphenol, 4-(1,1-Dimethyl-propyl)-phenol, 4-(1,1,3,3-Tetramethylbutyl)-phenol, Nonylphenol, Dodecylphenol, 2-, 3-, 4-Isopropylphenol, 2,4-, 2,5-Dichlorphenol, 2,4,5-Trichlorphenol, 3- oder 4-Nitrophenol, 3-Chlor-4-nitrophenol, 4-Chlor-2-methylphenol, 5-Chlor-2-methylphenol, 6-Chlor-3-methyl-phenol, 4-Methyl-2-nitrophenol,
2-, 3-, 4-Hydroxybenzoesäuremethyl- oder -äthylester, 2-Cyclohexylphenol, 4-Chlorhexylphenol, 2-Cyclohexyl-4-methylphenol, 2-, 3-, 4-Methoxyphenol, 2-(1-Methyläthoxy)-phenol, 2-Äthoxyphenol, 2-, 4-Phenoxyphenol, 2-, 3-, 4-Methylmercaptophenol, 3,5-Dimethyl-4-(methylmercapto)-phenol, 2-, 3-, 4-Hydroxybiphenyl, 2-, 4-Benzylphenol, 5,6,7,8-Tetrahydro-1-naphthol, 1-Naphthol, 2-Naphthol, 1-Hydroxy-anthrachinon, 2-Hydroxyanthrachinon, 2-, 4-Hydroxypyridin, 2-, 4-Hydroxychinolin, 3-Hydroxy-2-methylchinolin, Methanol, Äthanol, Propanol, Isopropanol, Butanol, Isobutanol, sec.Butanol, tert.Butanol, 2-Methoxyäthanol 2-Äthoxyäthanol, 2-Chloräthanol, Methylmercaptan, Äthylmercaptan, Mercaptoäthanol, Fluorphenol.

Die Kondensationsreaktionen können in organischen Lösungsmitteln, wie Aceton, Acetonitril, Benzol, Toluol, Xylolen, Nitrobenzol, chlorierten Kohlenwasserstoffen, Dimethylformamid, Formamid, N-Methylpyrrolidon, Tetramethylensulfon, Dioxan, Tetrahydrofuran und ähnlichen, in Anwesenheit, säurebindender organischer Basen, wie beispielsweise N,N-Dimethylanilin, N,N-Diäthylanilin, Trimethylamin, Triäthylamin, N,N-Dimethylcyclohexylamin, Diazabicyclooctan und ähnlichen, vorgenommen werden.

5) Austausch von Chlor gegen Fluor im Triazinrest in den entsprechenden Chlortriazinyl-Farbstoffen mit Alkalifluoriden in organischen Lösungsmitteln wie Tetramethylensulfon, N-Methylpyrrolidon, Dimethylformamid.

6) Kupplung diazotierter Amine mit Kupplungskomponenten, wobei die Diazo- und/oder die Kupplungskomponente einen Halogentriazinylrest und eine basische Gruppe enthalten.

Die neuen reaktiven Farbstoffe sind — in Form ihrer Salze oder Quartärverbindungen — in Wasser löslich und können sowohl als Einzelfarbstoffe als auch in Mischungen zum Färben und Drucken eingesetzt werden; sie sind für das kontinuierliche Färben und Bedrucken von synthetischen Fasermaterialien, wie Celluloseester, Polyamid und vor allem Polyester-Fasern, sowie für das kontinuierliche Färben und Drucken von in Wasser quellbaren Cellulosefasern geeignet und werden nach den üblichen Verfahren appliziert.

Von besonderem Interesse ist das Verfahren für das kontinuierliche Färben und Bedrucken von Mischfasern aus Cellulose und synthetischen Fasern, insbesondere Baumwoll-Polyester-Mischfasern, da es ein Ton-in-Ton-Färben bzw. -Drucken in einstufiger Arbeitsweise ermöglicht. Gegebenenfalls können übliche nicht-reaktive Dispersionsfarbstoffe mitverwendet werden. Vorzugsweise wird dabei in essigsaurem Medium gearbeitet. Die Mitverwendung bekannter Hilfsmittel (Farbstofflösungsmittel bzw. Quellmittel), wie sie beispielsweise in der Deutschen Auslegeschrift 1 811 796 sowie den Deutschen Offenlegungsschriften 2 525 243, 2 528 743 und 2 751 830 beschrieben sind (vorzugsweise Polyglykole), sind bei dem neuen Farbstofftyp nicht zwingend; durch Zusatz geringer Mengen (5—30 g/kg) kann die Farbstoffverteilung auf dem Mischgewebe Polyester/Baumwolle gesteuert werden.

Besonders gute Ergebnisse erhält man bei Mitverwendung von organischen Fixierhilfsmitteln (Säurefänger). Geeignete Fixierhilfsmittel, die vorzugsweise in Mengen von 1—5 g/kg Klotzflotte bzw. Druckpaste eingesetzt werden, sind Mono- und Polyepoxide, insbesondere die Umsetzungsprodukte, aliphatischer Alkohole oder Polyole mit Epichlorhydrin. Beispielhaft genannt seien Umsetzungsprodukte von Alkylglykolen, Monoalkyläthern von Polyglykolen oder von Polyglykolen, wie

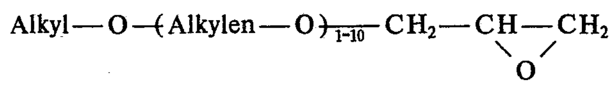

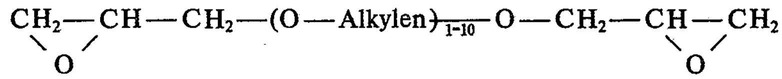

mit Alkyl = $C_1$–$C_4$-Alkyl und Alkylen = $C_2$–$C_4$-Alkylen, wie sie beispielsweise in der DE-A 2 838 274 beschrieben sind.

Vorzugsweise wird bei den Färbe- und Druckverfahren kein Alkali zugesetzt, vielmehr in schwach saurem Medium gearbeitet.

Mit den neuen reaktiven Farbstoffen erhält man Färbungen und Drucke, deren Farbtöne auf den Mischfasern gut übereinstimmen. Sie zeichnen sich durch sehr gute Echtheiten aus, wobei neben der Sublimier-, Licht- und Trockenreinigungsechtheit besonders die Naßechtheiten hervorzuheben sind.

Während bei den oben erwähnten Quellungsverfahren mit ausgesuchten Dispersionsfarbstoffen die Farbstoffe der Cellulosefärbungen z. B. mit N-Methylpyrrolidon vollständig extrahierbar sind, sind die Färbungen mit den neuen reaktiven Farbstoffen gegenüber dem Extraktionsmittel beständig, da sie eine kovalente Bindung mit der Cellulosefaser eingegangen sind.

Die neuen reaktiven Farbstoffe werden – falls sie nicht bereits in wasserlöslicher Form vorliegen – vor dem Färben bzw. Drucken vorzugsweise mit organischen Säuren wie verdünnter Essigsäure in eine wasserlösliche Form überführt; die Klotzflotte bzw. Druckpaste kann neben Wasser übliche Bestandteile, wie Dispergiermittel, Verdickungsmittel und/oder Quellmittel und/oder Farbstofflösungsvermittler enthalten.

Das Färben wird in der Weise vorgenommen, daß man die Cellulosefasern enthaltenden Textilmaterialien mit den wäßrigen Klotzflotten in üblicher Weise imprägniert, auf eine Gewichtszunahme von 40–100% abquetscht und gegebenenfalls nach einer kurzen Zwischentrocknung – einer 30–90 Sekunden währenden thermischen Behandlung von 190–230°C unterwirft.

Zum Bedrucken werden die Druckpasten unter Verwendung der für Reaktivfarbstoffe üblichen Verdickungsmittel wie Alginate hergestellt. Die Farbstoffe werden auf den bedruckten Textilmaterialien entweder durch eine ein- bis zweiminütige Behandlung mittels Trockenhitze von 180–230°C oder durch ein zwei- bis fünfzehnminütiges Dämpfen bei 170–210°C fixiert.

Darüber hinaus sind die Farbstoffe zum Färben von Zellstoff bzw. Papier aus essigsaurer Lösung geeignet, wobei die zur Papierfärbung üblichen Verfahren zur Anwendung kommen, das heißt entweder Zellstoffmasse zunächst nach Zusatz von Leimungsmitteln und Aluminiumsulfat gefärbt und darauf das Papierblatt gewonnen wird oder fertiggestelltes Papierblatt nach Stärkezusatz durch Eintauchen in die Färbelösung an der Oberfläche gefärbt wird.

Zum Stand der Technik ist folgendes zu bemerken:

Aus GB-A 951 667 sind ausschließlich kationische Farbstoffe bekannt, welche Verwendung zum Färben von rein synthetischen Fasern und insbesondere zum Färben von Copolymeren von Acrylnitril-Dicyanethylen finden. Das einzige Triazin-Beispiel (siehe dazu Example 6) enthält kein Halogenatom am Fluortriazinring, sondern ausschließlich Aminosubstituenten. Für das Ton-in-Ton-Färben von Mischfasern aus Cellulose und synthetischen Fasern wären die in GB-A 951 667 offenbarten Verbindungen nicht geeignet.

Aus CH-A 390 411 sind Umsetzungsprodukte von organischen, in Wasser schwer- bis unlöslichen Farbstoffen mit zur Bildung von gegebenenfalls veretherte Alkylolgruppen enthaltenden Aminoplastvorkondensaten- geeigneten, Aldehyde und Amine enthaltenden Gemischen bekannt. Es entstehen dabei harzartige hochmolekulare Reaktionsprodukte, mit denen die Färbung von Textilien durchgeführt wird. Im Gegensatz dazu wird erfindungsgemäß unter Einsatz der konkret definierten Farbstoffe gemäß Anspruch 1 oder 2 gefärbt.

Bei den Farbstoffen gemäß DE-A 2 425 283 handelt es sich um »klassische« Reaktivfarbstoffe, wobei alle im Anmeldungstext offenbarten Verbindungen wasserlöslich machende ionische Gruppen (vorzugsweise $SO_3H$-Gruppen) enthalten. Die Färbung mit Hilfe dieser Farbstoffe geschieht im alkalischen Medium, die bei der Kondensationsreaktion mit der Faser abgespaltene Säure wird durch Alkali gebunden. Im Gegensatz dazu wird bei den erfindungsgemäßen Farbstoffen vorzugsweise im schwach sauren Medium gearbeitet. Siehe dazu Beschreibung 2 und 3 der vorliegenden Anmeldung. Für das erfindungsgemäße Ton-in-Ton-Färben von Mischfasern wären die Farbstoffe aus DE-A 2 425 283 nicht geeignet.

## Beispiel 1

11,0 g 4'-Amino-3-hydroxychinophthalon werden in 60 ml Nitrobenzol suspendiert. Man versetzt die Suspension mit 5,4 g N,N-Dimethylanilin und läßt bei 20° in 10 Minuten 6,0 g 2,4,6-Trifluortriazin zutropfen. Nach zweistündigem Nachrühren ist die Kondensation beendet. Man läßt 60 ml Toluol zu der Suspension zulaufen, saugt den Niederschlag ab und wäscht ihm mit Toluol. Der erhaltene Filterkuchen wird in 80 ml Toluol suspendiert. Zur erhaltenen Suspension läßt man im Laufe von 30 Minuten 6,2 g 1-Amino-3-dimethylaminopropan bei 20° zutropfen und rührt 2 Stunden nach. Die Farbstoffsuspension wird abgesaugt, der Filterkuchen mit Toluol gewaschen und im Umluftschrank bei 60° getrocknet.
Man erhält einen Farbstoff der Formel

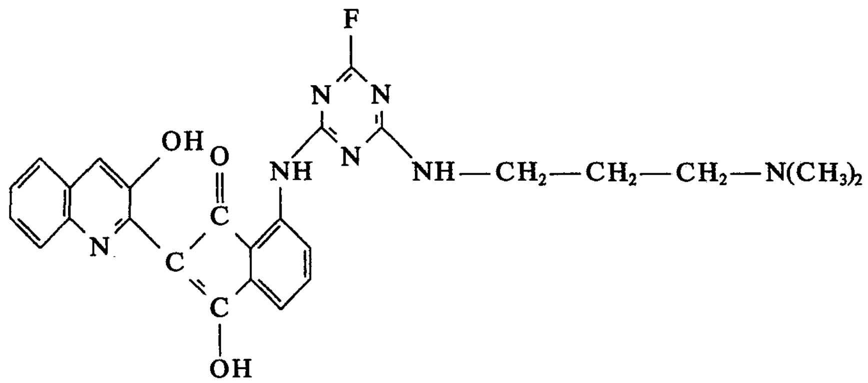

welcher in verdünnter Essigsäure leicht löslich ist und aus dieser Lösung nach den Verfahren der Beispiele 2 und 3 auf Polyester-Baumwoll-Mischfasern tongleiche Gelbfärbungen mit sehr guten Maß- und Reibechtheiten und ausgezeichneten Lichtechtheiten ergibt.
Einen sehr ähnlichen Farbstoff erhält man, wenn man anstelle des 4'-Amino-3-hydroxychinophthalons äquivalente Mengen eines Gemisches an 3'- und 4'-Amino-3-hydroxychinophthalon einsetzt.

## Beispiel 2

10,5 g des nach Beispiel 1 erhaltenen Farbstoffes werden in Wasser suspendiert, durch Übergießen mit 30 ml 30%iger Essigsäure in Lösung gebracht und die entstandene Lösung auf 1000 ml aufgefüllt.
Man imprägniert mit Hilfe eines Foulards ein Polyester-Baumwoll-Mischgewebe mit einem Verhältnis von Polyester zu Baumwolle von 65/35, wobei die Flottenaufnahme des Gewebes ca. 65% beträgt. Das so behandelte Gewebe wird getrocknet und der Farbstoff auf beiden Fasern durch eine Heißluftbehandlung in einer Thermosolanlage bei 215° während 60 Sekunden fixiert. Nach der üblichen seifenden Nachbehandlung nahe Kochtemperatur erhält man nach dem Trocknen einen vollen neutralen Gelbton, der auf beiden Fasermaterialien eine gute Übereinstimmung im Farbton ergibt. Die fertiggestellte Färbung zeigt eine gute Tageslichtechtheit, gute Trocken- und Naßreibechtheiten sowie hervorragende Naßechtheiten.
Anstelle der beschriebenen Heißluftbehandlung kann man das geklotzte Polyester-Baumwoll-Mischgewebe auch einem 8 Minuten langen Dämpfprozeß bei 175°C unterwerfen.

## Beispiel 3

10,5 g des nach Beispiel 1 erhaltenen Farbstoffes werden in Wasser suspendiert und mit 30 ml verdünnter Essigsäure (30%ig) in Lösung gebracht. Man gibt 4,0 g einer Epoxidverbindung der Formel

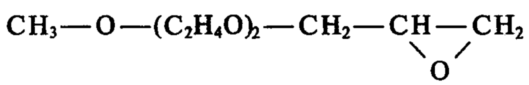

26,0 g Polyäthylenglykoläther vom MG 400 und 10,0 g einer 10%igen wäßrigen Lösung eines üblichen Verdickers hinzu und füllt das Ganze mit Wasser auf 1000 ml auf.
Mit der so bereiteten Klotzflotte nimmt man die Färbung von Polyester-Baumwoll-Mischgewebe vor, wie sie im Beispiel 2 beschrieben ist.
In Abwandlung des beschriebenen Vorgehens kann man den Farbstoff statt in verdünnter Essigsäure auch dadurch in Lösung bringen, daß man ihn in Wasser suspendiert und durch vorsichtigen Zusatz von 10%iger Salzsäure einen pH-Wert von 3,5—4 einstellt.

### Beispiel 4

11,2 g 1-Amino-anthrachinon werden in 100 ml Nitrobenzol und 12,5 ml Dimethylformamid suspendiert bzw. gelöst. Innerhalb von 30 Minuten läßt man 7,3 g 2,4,6-Trifluortriazin zutropfen, rührt 30 Minuten nach und steigert dann die Temperatur auf 50°. Man rührt bei dieser Temperatur 30 Minuten nach, kühlt auf 20° ab, verdünnt die Mischung mit 125 ml Methanol, saugt das Difluortriazinylaminoanthrachinon ab und trocknet es bei 50° im Umluftschrank.

15,8 g des erhaltenen Zwischenproduktes werden in 90 ml Toluol suspendiert. Man läßt in 30 Minuten 9,5 g 1-Amino-3-dimethylaminopropan zutropfen und rührt noch 1 Stunde nach. Der ausgefallene Farbstoff wird abgesaugt, mit Toluol und Ligroin gewaschen und im Umluftschrank bei 50° getrocknet. Er besitzt die Formel

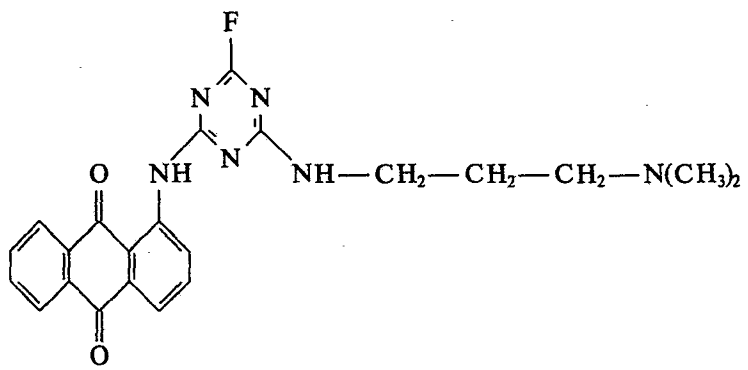

und färbt Polyester-Baumwollmischungen aus schwach saurer Lösung nach dem Verfahren der Beispiele 2 und 3 in licht-, reib- und naßechten Gelbtönen gleichmäßig an.

### Beispiel 5

10,3 g 1-Amino-4,8-dihydroxy-5-isopropylamino-anthrachinon werden in 80 ml Nitrobenzol und 20 ml Dimethylformamid eingetragen. Man läßt 4,8 g 2,4,6-Trifluortriazin in 5 Minuten zutropfen und die Temperatur dabei gegen 30° ansteigen. Anschließend hält man den Ansatz 15 Minuten bei 30—35°, steigert dann die Temperatur noch auf 50° und rührt bei dieser Temperatur 15 Minuten nach. Der Ansatz wird abgekühlt auf 20° und mit 100 ml Methanol verdünnt. Man saugt das ausgefallene Zwischenprodukt ab, wäscht es mit Methanol und trocknet es bei 50° im Umluftschrank.

8,5 g des erhaltenen Produktes werden in 85 ml Toluol verrührt. Zu der Suspension läßt man in 15 Minuten 4,1 g 1-Amino-3-dimethylaminopropan zutropfen und läßt dabei die Temperatur auf 35° ansteigen. Nach 30 Minuten bei 65° ist die Umsetzung beendet. Der erhaltene Farbstoff der Formel

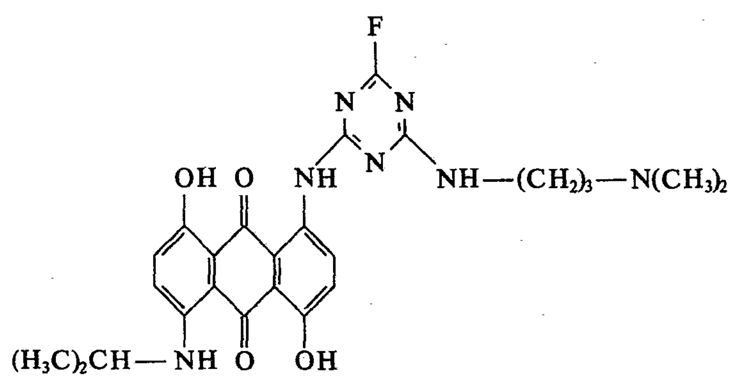

wird abgesaugt, mit Toluol und Petroläther gewaschen und bei 60° im Umluftschrank getrocknet.

Der Farbstoff ergibt auf Polyester-Baumwoll-Mischungen nach dem Verfahren des Beispiels 3 gleichmäßige licht-, naß- und reibechte Blaufärbungen.

### Beispiel 6

15 g 1-Amino-2-(4'-aminophenoxy)-4-hydroxy-anthrachinon werden in 45 ml Nitrobenzol und 6,3 g N,N-Dimethylanilin suspendiert. Man läßt bei 20° in 10 Minuten 7,1 g 2,4,6-Trifluortriazin zutropfen und saugt nach einstündigem Nachrühren, wenn die Kondensation beendet ist, den ausgefällten Farbstoff ab, wäscht ihn mit Methanol und trocknet das Zwischenprodukt bei 50° im Umluftschrank.

16,5 g des erhaltenen Difluortriazinylamino-Farbstoffes werden in 90 ml Toluol suspendiert. Man läßt ab 20° 6,7 g 1-Amino-3-dimethylamino-propan in 45 Minuten zutropfen, wobei die Temperatur allmählich gegen 30° ansteigt. Nach einstündigem Nachrühren ist die Kondensation beendet. Der als Suspension vorliegende Farbstoff der Formel

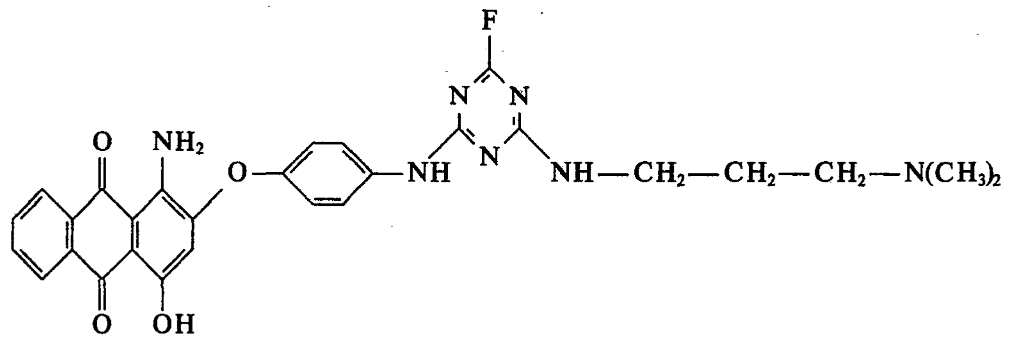

wird abgesaugt, mit Toluol gewaschen und bei 60° im Umluftschrank getrocknet. Der in verdünnter Essigsäure lösliche Farbstoff färbt Polyester-Baumwoll-Mischgewebe nach den Verfahren der Beispiele 2 und 3 tongleich in roten Tönen mit sehr guten Echtheiten.

## Beispiel 7

24 g 5-Amino-1,4-bis-phenylthio-anthrachinon werden in 80 ml Nitrobenzol und 8,3 g N,N-Dimethylanilin suspendiert. Man läßt in 15 Minuten bei 20° 9,2 g 2,4,6-Trifluortriazin zutropfen und rührt zur Beendigung der Kondensation 1 Stunde nach. Die Fällung wird abgesaugt, der Filterkuchen mit Methanol gewaschen und bei 50° im Umluftschrank getrocknet.

20,5 g des erhaltenen Kondensationsproduktes werden in 100 ml Toluol suspendiert. Man läßt bei 20—25° 7,8 g 1-Amino-3-dimethylaminopropan in 1 Stunde zutropfen und rührt anschließend noch 2 Stunden nach. Der ausgefällte Farbstoff wird nun abgesaugt, mit Toluol gewaschen und bei 60° im Umluftschrank getrocknet. Er entspricht der Formel

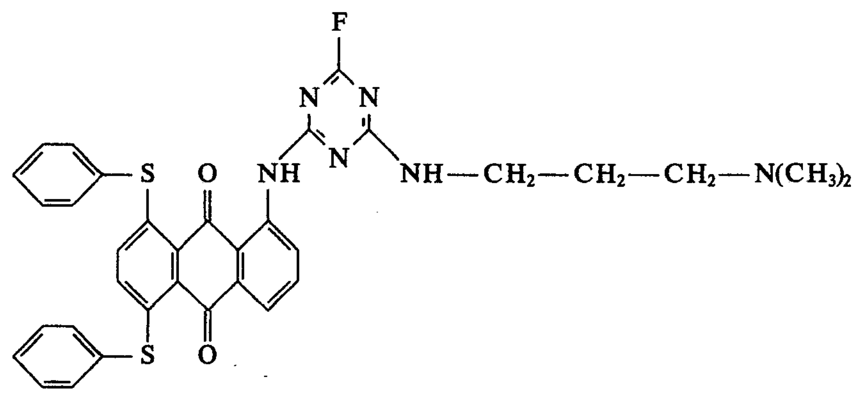

und färbt Polyester-Baumwoll-Mischfasern aus verdünnt essigsauren Lösungen nach dem Verfahren der Beispiele 2 und 3 in scharlachroten Tönen mit sehr guten Naßechtheiten gleichmäßig an.

## Beispiel 8

12 g 1-Amino-4-hydroxy-anthrachinon werden in 60 ml Nitrobenzol und 25 ml Dimethylformamid suspendiert. Anschließend läßt man 7,5 g 2,4,6-Trifluortriazin in 5 Minuten zutropfen und dabei die Temperatur gegen 40° ansteigen. Das Reaktionsgemisch wird noch 30 Minuten auf 50—55° erwärmt, bis die Kondensation beendet ist. Man läßt abkühlen, verdünnt mit 100 ml Methanol, saugt ab und wäscht mit Methanol. Das Difluortriazinylamino-hydroxyanthrachinon wird im Umluftschrank bei 60° getrocknet.

8,5 g des erhaltenen Zwischenproduktes werden in 80 ml Toluol verrührt. Man läßt 5,8 g 1-Amino-2-diäthylaminoäthan zutropfen in 15 Minuten, wobei die Temperatur auf 35° ansteigen darf. Nach 30 Minuten Nachrührdauer ist die Kondensation beendet. Der ausgefallene Farbstoff wird bei 20° abgesaugt, mit Toluol und Petroläther gewaschen und bei 50° im Umluftschrank getrocknet. Der erhaltene Farbstoff entspricht der Formel

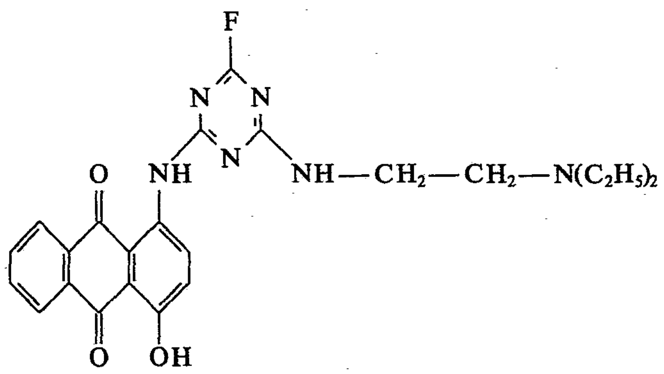

und ergibt nach Lösen in verdünnter Essigsäure auf Polyester-Baumwoll-Mischungen gemäß den Beispielen 2 und 3 tongleiche scharlachrote Färbungen mit guten Licht-, Reib- und Naßechtheiten.

### Beispiel 9

13,1 g 1,4-Diamino-anthrachinon-2-sulfonsäurephenylester werden in 90 ml Nitrobenzol und 20 ml Dimethylformamid eingetragen. Man läßt 4,8 g 2,4,6-Trifluortriazin zutropfen innerhalb von 5 Minuten und rührt noch 30 Minuten bei 30—40° und 30 Minuten bei 50—55° nach. Das Gemisch wird mit 120 ml Methanol bei 20° verdünnt. Man saugt das ausgefallene Produkt ab, wäscht es mit Methanol und trocknet es bei 50° im Umluftschrank. 10,2 g des erhaltenen Produktes werden in 80 ml Toluol angerührt. Die Suspension wird tropfenweise im Laufe einer halben Stunde mit 4,1 g 1-Amino-3-dimethylaminopropan versetzt. Man rührt 30 Minuten bei 25—30° nach, bis eine chromatographische Probe das Ende der Kondensation anzeigt. Der erhaltene Niederschlag wird abgesaugt, der Filterkuchen mit Toluol und Petroläther gewaschen und bei 50° im Umluftschrank getrocknet. Der erhaltene Farbstoff entspricht der Formel

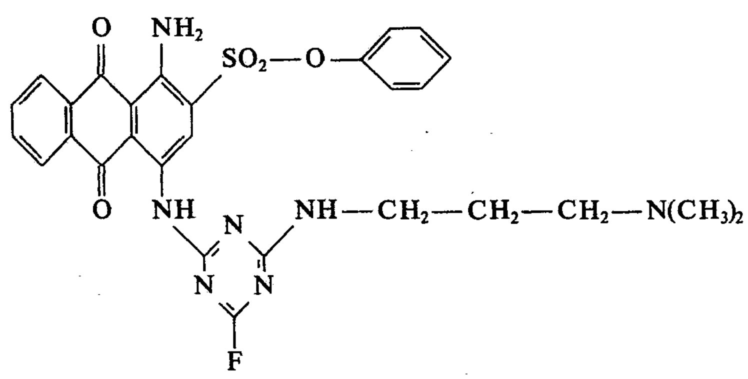

Er färbt nach Lösen in schwach saurem Milieu Polyester-Baumwoll-Mischungen gemäß den Verfahren der Beispiele 2 und 3 in licht-, naß- und reibechten violetten Tönen gleichmäßig an.

### Beispiel 10

11,0 g 1,4-Diamino-2-phenoxy-anthrachinon werden in 70 ml Nitrobenzol und 20 ml Dimethylformamid eingetragen. Man läßt im Laufe von 5 Minuten 4,8 g 2,4,6-Trifluortriazin zutropfen und erwärmt anschließend 30 Minuten auf 30—35° und weiterhin 30 Minuten auf 50—55°. Nach beendeter Kondensation wird mit 120 ml Methanol verdünnt. Das auskristallisierte Zwischenprodukt wird abgesaugt, mit Methanol gewaschen und bei 60° im Umluftschrank getrocknet.

8,9 g der erhaltenen Difluortriazinylaminoverbindung werden in 70 ml Toluol suspendiert. 4,1 g 1-Amino-3-dimethyl-aminopropan werden zugetropft in 15 Minuten, wobei die Temperatur auf etwa 30—35° ansteigen darf. Man rührt noch 30 Minuten nach, saugt dann den ausgefallenen Farbstoff ab,

wäscht ihn mit Toluol und danach mit Petroläther und trocknet ihn im Umluftschrank. Der Farbstoff der Formel

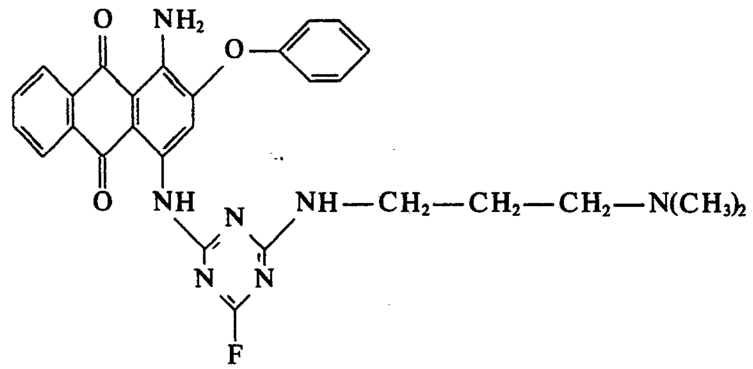

ergibt auf Polyester-Baumwoll-Mischungen gleichmäßige licht-, naß- und reibechte Färbungen in rotviolettem Farbton nach den in den Beispielen 2 und 3 geschilderten Verfahren aus essigsaurer Färbelösung.

Beispiel 11

10,2 g des nach Beispiel 4 gewonnenen 1-(4,6-Difluor-2-triazinylamino)-anthrachinons werden in 50 ml Toluol verrührt. Innerhalb von 30 Minuten läßt man 9,5 g 4-Amino-1-diäthylaminopentan zutropfen. Man rührt mehrere Stunden zur Beendigung der Kondensation nach. Danach gießt man den Ansatz langsam in 150 ml auf 5—10° abgekühlten Petroläther, rührt einige Zeit bei dieser Temperatur nach, saugt dann die Fällung ab und wäscht den Filterkuchen mit Petroläther. Nach Trocknung bei 50° im Umluftschrank erhält man ein Produkt, welches der Formel

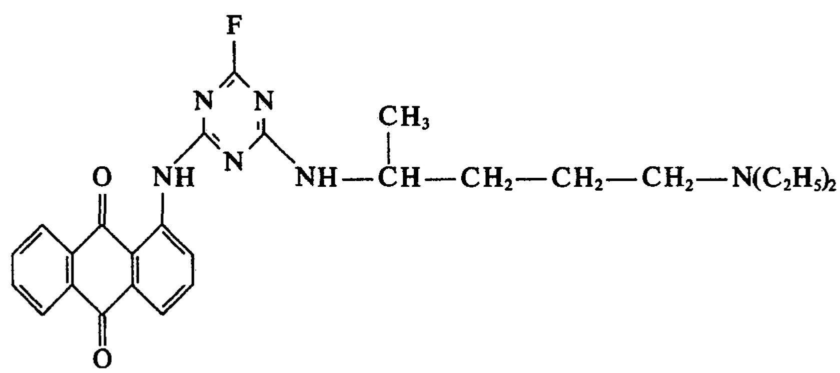

entspricht und nach den Verfahren der Beispiele 2 oder 3 aus schwach saurer Lösung Polyester-Baumwoll-Mischungen tongleich in licht-, naß- und reibechten gelben Nuancen färbt.

Beispiel 12

10,2 g des nach Beispiel 4 hergestellten 1-(4,6-Difluor-2-triazinylamino)-anthrachinons werden in 100 ml Toluol verrührt. Man gibt 3,0 g Triäthylamin und 4,5 g 2-Diäthylaminoäthanol hinzu und erhitzt 3 Stunden auf 60—65° und darauf noch 1 Stunde auf 80—85°. Anschließend wird auf 20° abgekühlt. Man setzt zum Reaktionsgemisch 170 ml Petroläther, saugt den ausgefällten Farbstoff ab, wäscht ihn mit Petroläther und trocknet bei 60° im Umluftschrank. Der Farbstoff der Formel

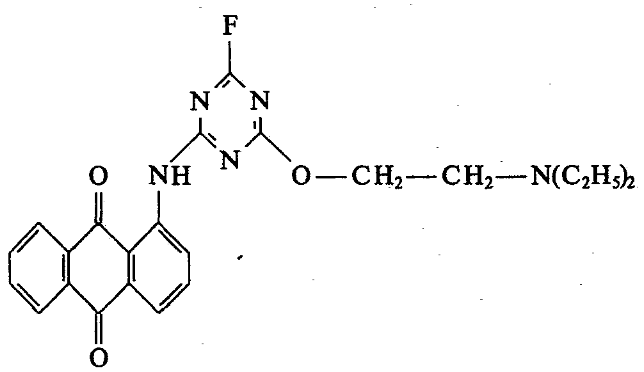

gibt aus essigsaurer Lösung nach den Verfahren der Beispiele 2 und 3 auf Polyester-Baumwoll-Mischungen tongleiche, sehr naß- und reibechte Färbungen.

Beispiel 13

18 g Farbstoff des Beispiels 6 werden in 120 ml Nitrobenzol gelöst. Nach Erwärmen auf 60° läßt man 4,5 g Dimethylsulfat in 10 Minuten zutropfen. Nach 30 Minuten zeigt eine Probe im Chromatogramm an, daß die Umsetzung beendet ist. Die erhaltene Farbstoffsuspension wird auf 20° abgekühlt, der Farbstoff abgesaugt, mit Nitrobenzol zweimal abgedeckt und dann mit Toluol gewaschen. Nach Trocknung im Umluftschrank bei 50° erhält man einen Farbstoff der Formel

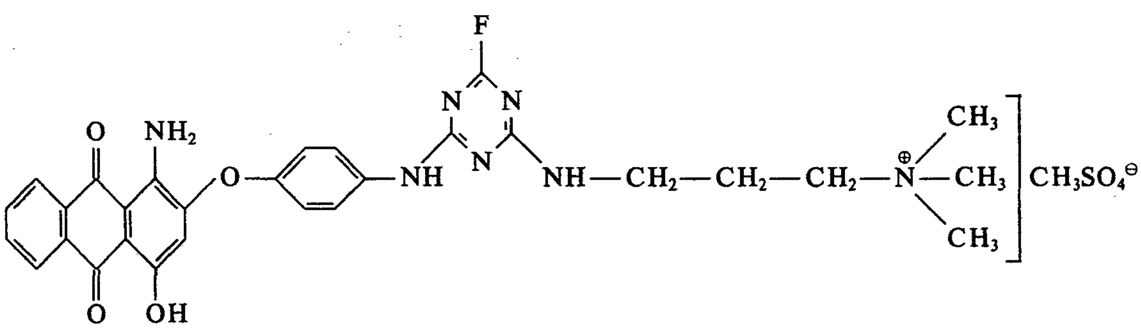

der Polyester-Baumwoll-Mischungen nach den Verfahren der Beispiele 2 und 3 gleichmäßig in roten Tönen mit ausgezeichneten Echtheiten anfärbt.

Beispiel 14

11,2 g des nach Beispiel 4 hergestellten 1-(4,6-Difluor-2-triazinylamino)-anthrachinons werden in 50 ml Nitrobenzol suspendiert. Man gibt 5,0 g 2-Aminobenzyl-N,N-dimethylamin dazu und rührt 1½ Stunden bei 20–30° weiter, wobei zunehmende Lösung eintritt. Nach beendeter Kondensation setzt man 120 ml Petroläther zu, rührt 1 Stunde zur Vervollständigung der Fällung nach, saugt den ausgefällten Farbstoff ab und wäscht ihn mit Petroläther. Nach Trocknung bei 60° im Umluftschrank erhält man einen in verdünnter Essigsäure gut löslichen Farbstoff der Formel

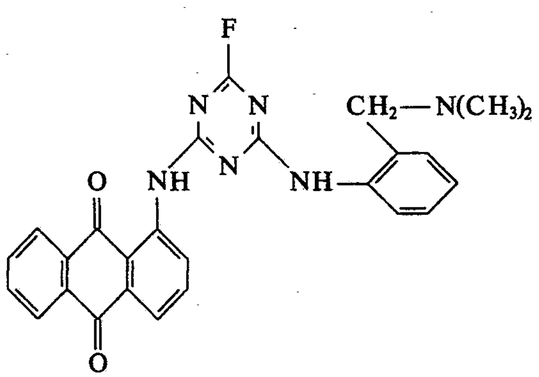

der Polyester-Baumwoll-Mischungen nach den Verfahren der Beispiele 2 und 3 in licht-, naß- und reibechten Gelbtönen gleichmäßig anfärbt.

In analoger Weise können die weiteren in Tabelle I zusammengestellten Anthrachinonfarbstoffe hergestellt werden, die auf Polyester-Baumwoll-Mischungen nach Lösen in schwach saurem Medium gemäß den Verfahren der Beispiele 2 und 3 tongleiche echte Färbungen der angegebenen Nuancen liefern.

Tabelle I

| Beispiel Nr. | Farbstoff | Farbton |
|---|---|---|
| 15 | 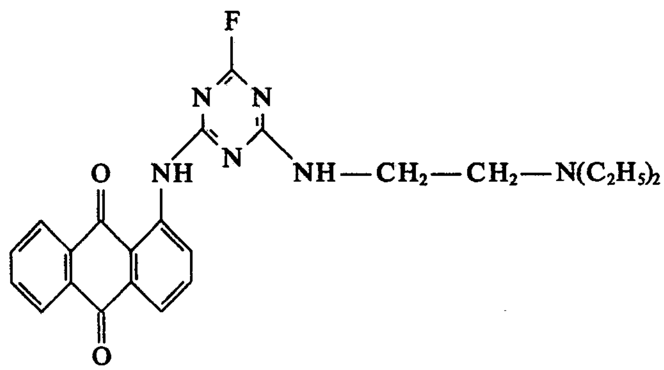 | gelb |
| 16 | 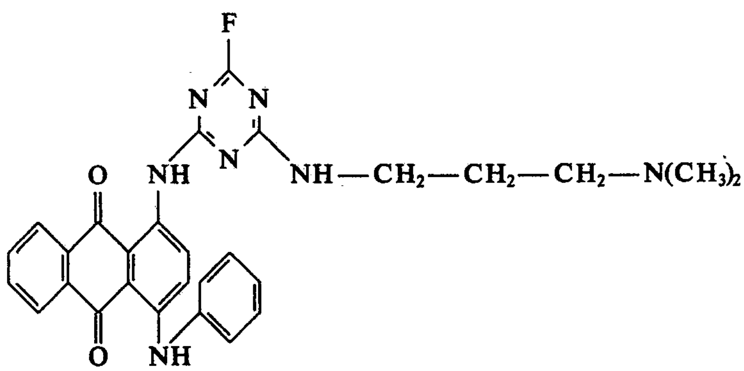 | blau |
| 17 | 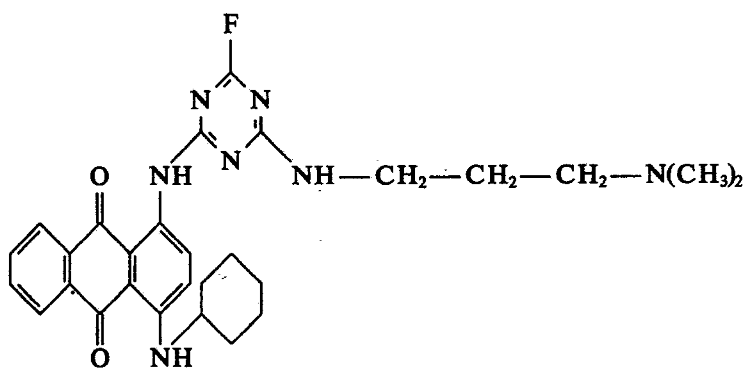 | violett |
| 18 | 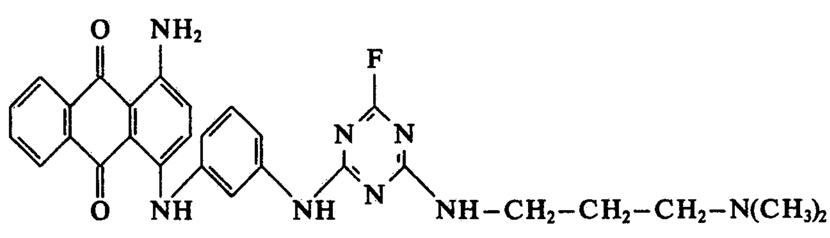 | blau |

Fortsetzung

| Beispiel Nr. | Farbstoff | Farbton |
|---|---|---|
| 19 | 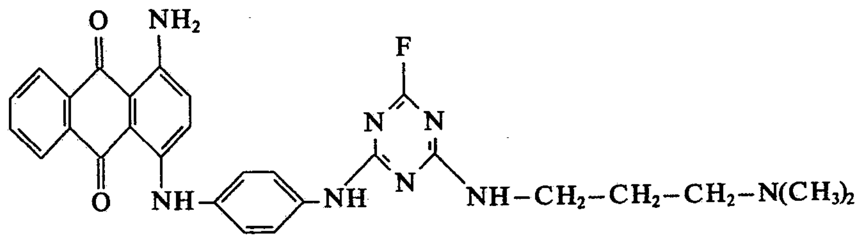 | blau |
| 20 | 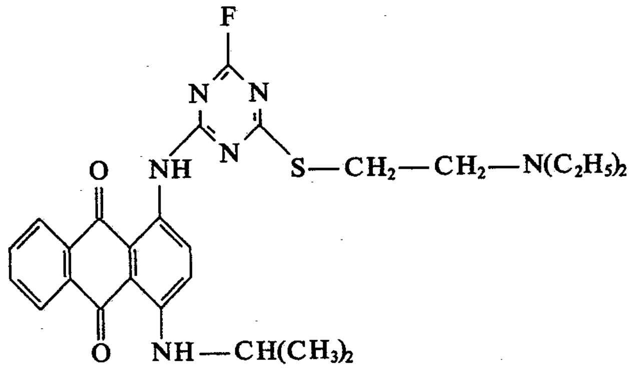 | blau |
| 21 | 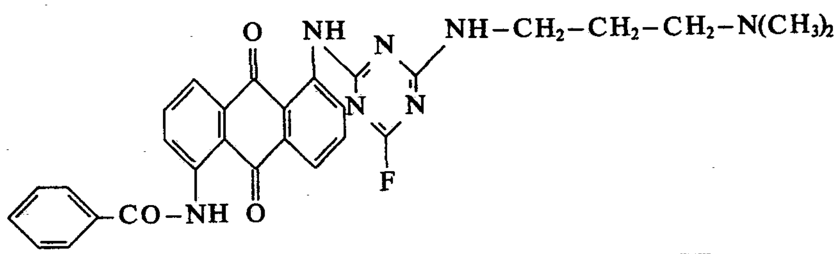 | orange |
| 22 | 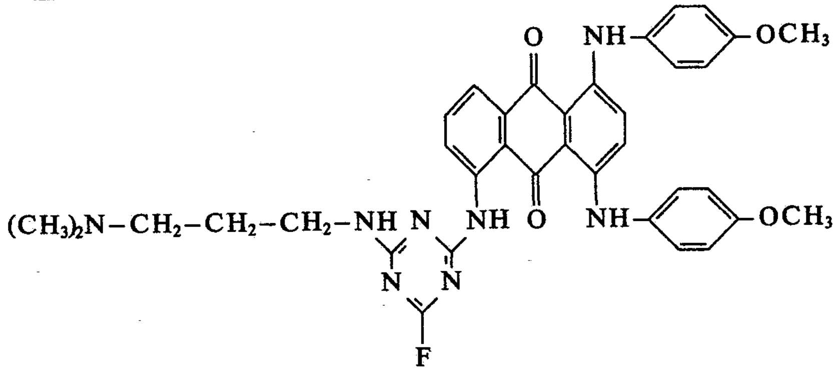 | grün |
| 23 | 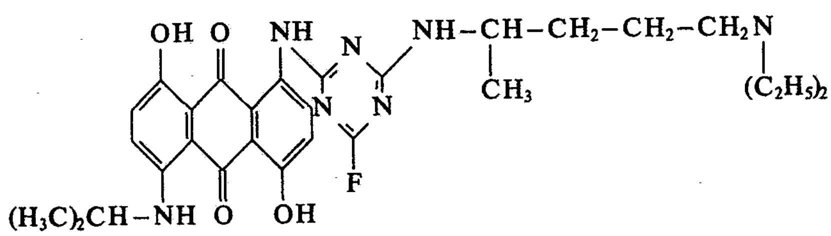 | blau |

Fortsetzung

| Beispiel Nr. | Farbstoff | Farbton |
|---|---|---|
| 24 | 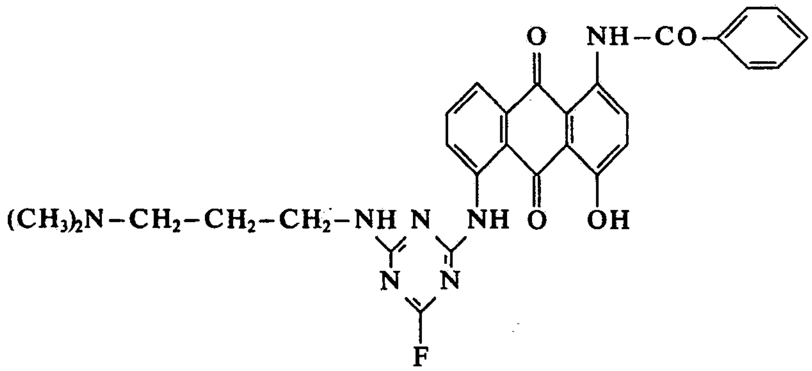 | rot |
| 25 | 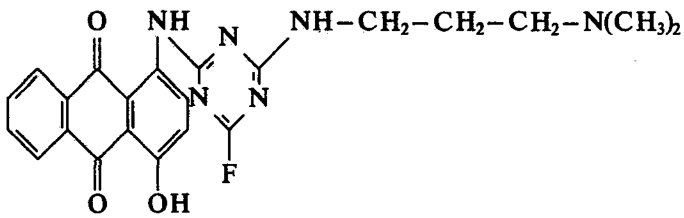 | scharlach |
| 26 | 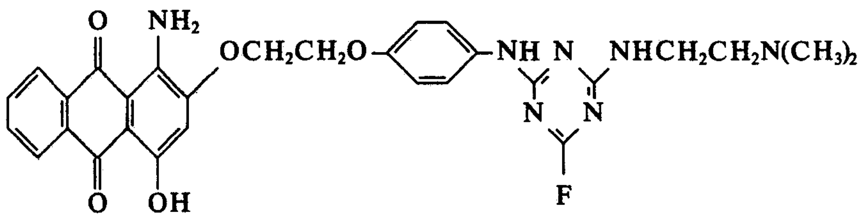 | rot |
| 27 | 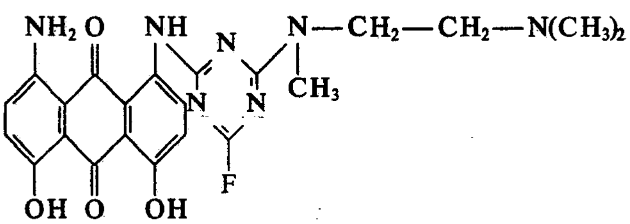 | blau |
| 28 | 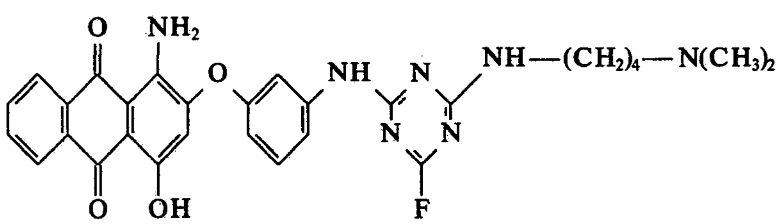 | rot |
| 29 | 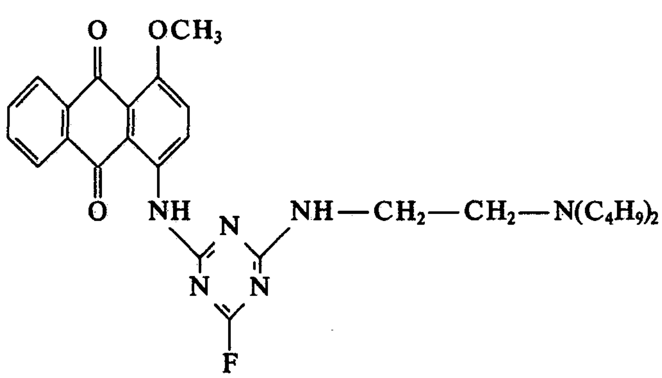 | orange |

Fortsetzung

| Beispiel Nr. | Farbstoff | Farbton |
|---|---|---|
| 30 | 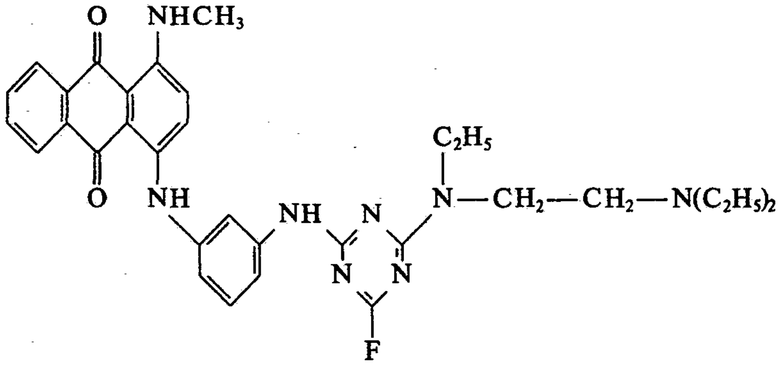 | blau |
| 31 | 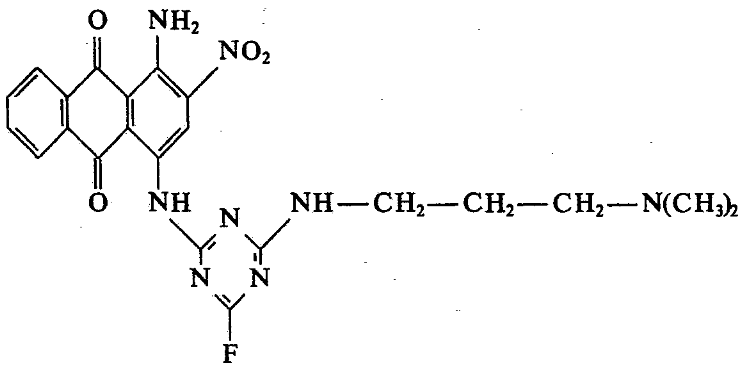 | blau |
| 32 | 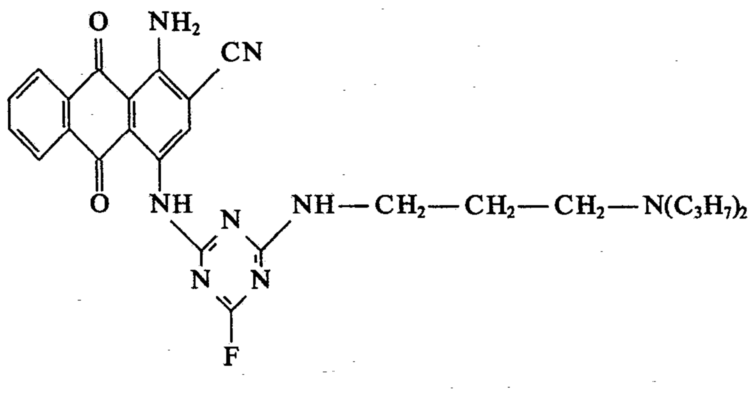 | blau |
| 33 | 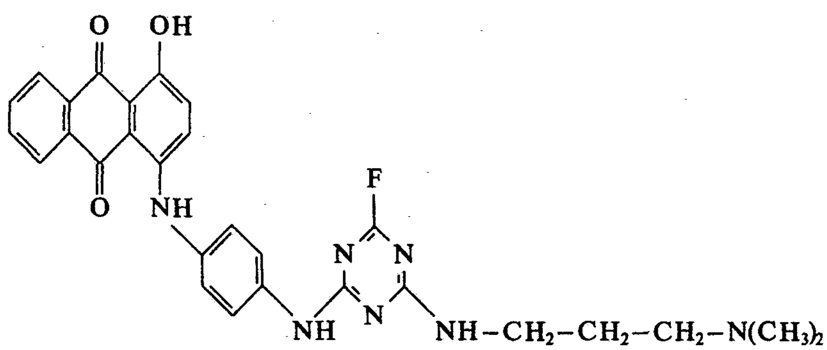 | blau |

Fortsetzung

| Beispiel Nr. | Farbstoff | Farbton |
|---|---|---|
| 34 | 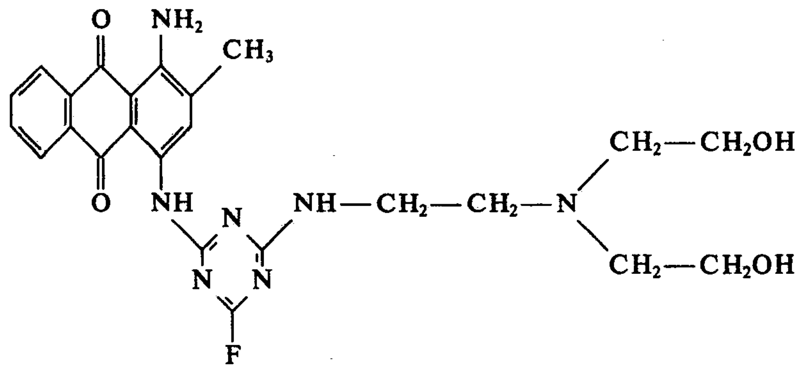 | violett |
| 35 | 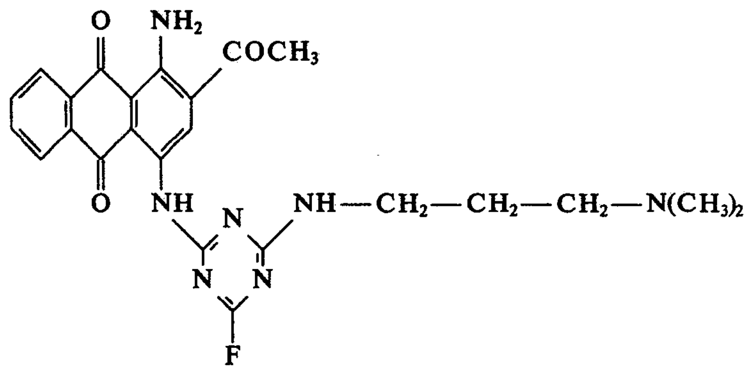 | blau |
| 36 | 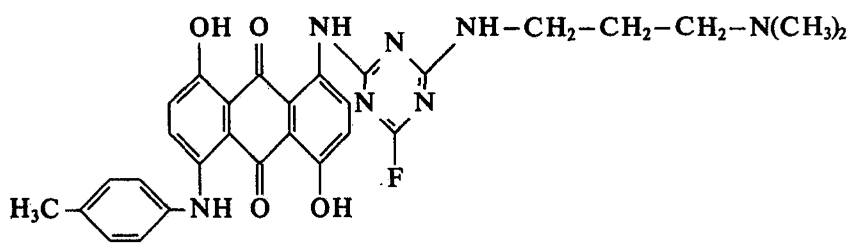 | blau |
| 37 | 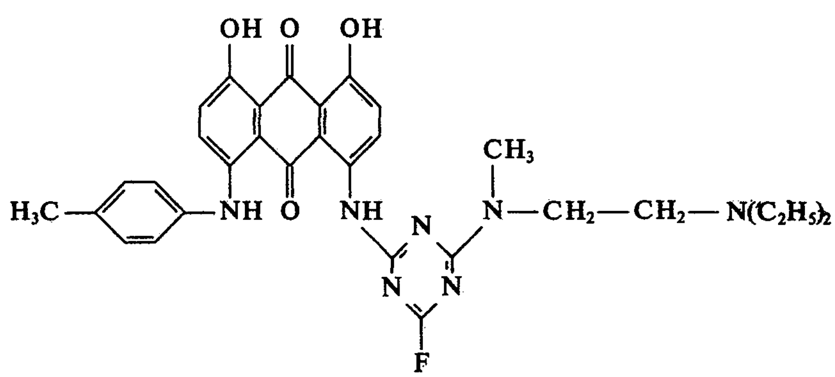 | blau |

Fortsetzung

| Beispiel Nr. | Farbstoff | Farbton |
|---|---|---|
| 38 | 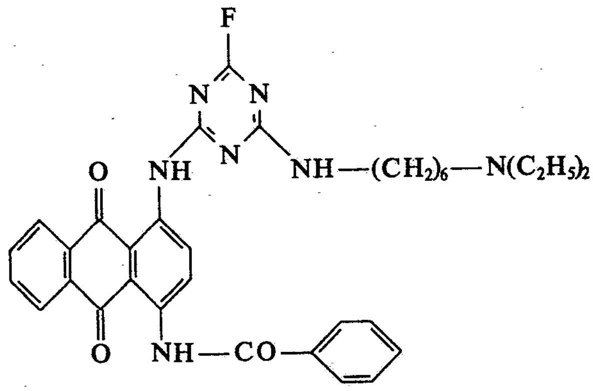 | scharlach |
| 39 | 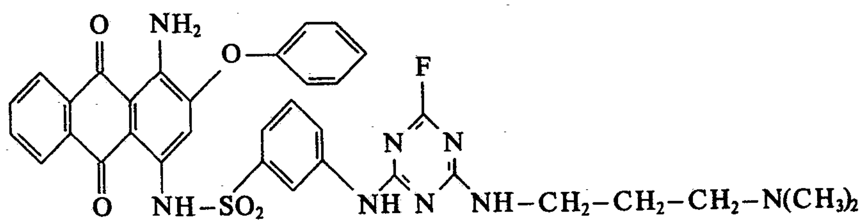 | rot |
| 40 | 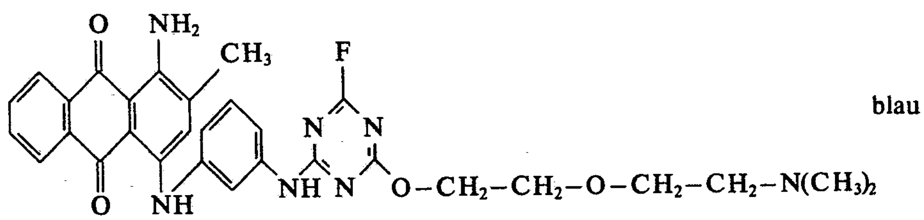 | blau |
| 41 | 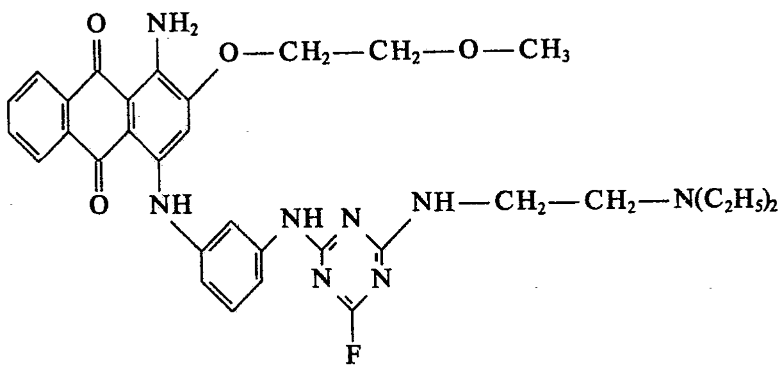 | violett |
| 42 | 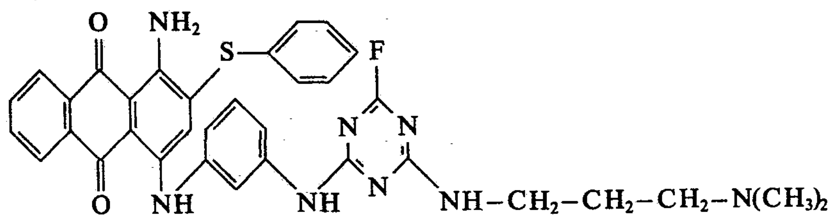 | blau |

Fortsetzung

| Beispiel Nr. | Farbstoff | Farbton |
|---|---|---|
| 43 | 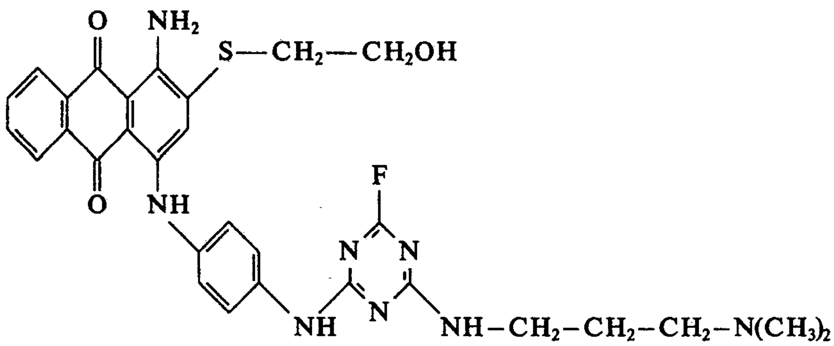 | blaugrün |
| 44 | 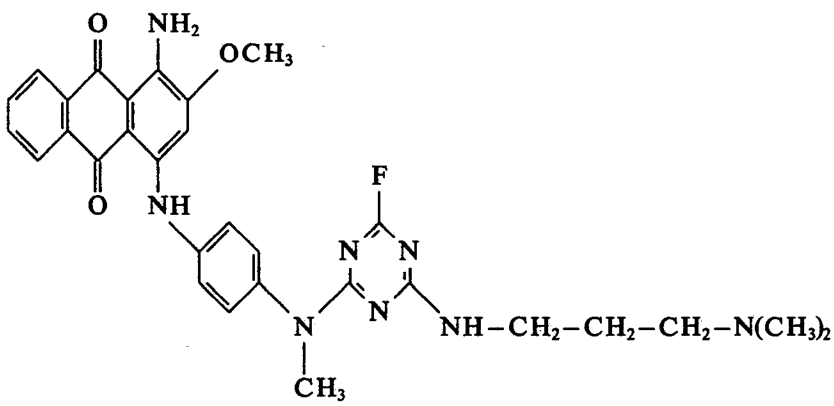 | blau |
| 45 | 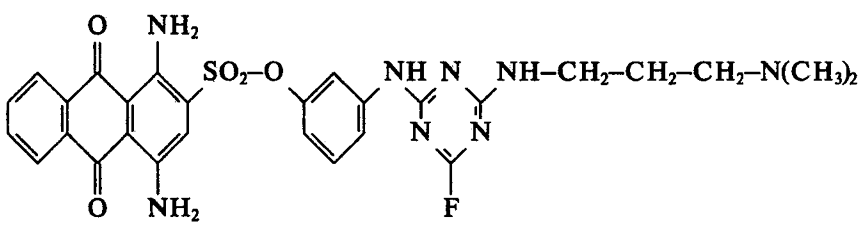 | blau |
| 46 | 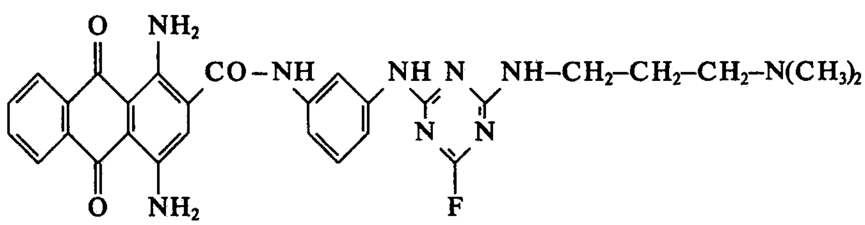 | blau |
| 47 | 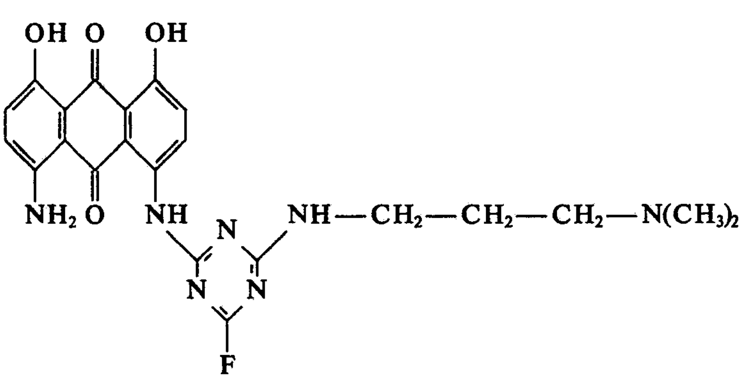 | blau |

Fortsetzung

| Beispiel Nr. | Farbstoff | Farbton |
|---|---|---|
| 48 | 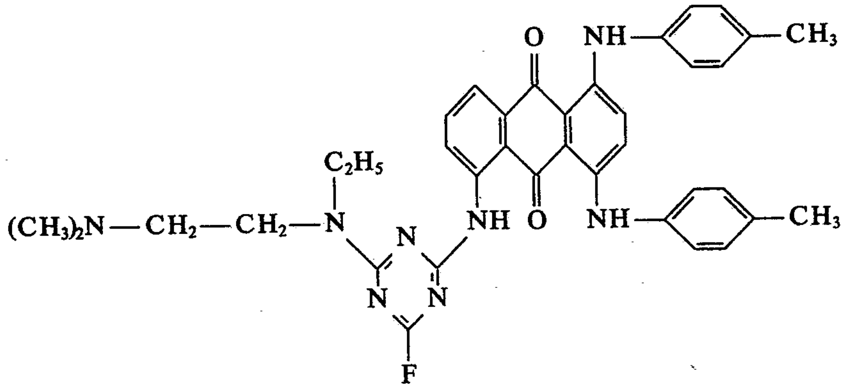 | grün |
| 49 | 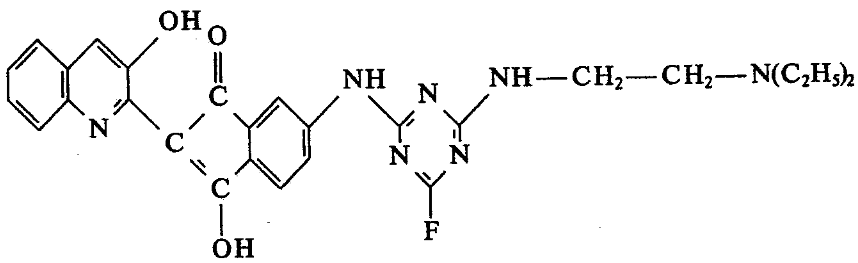 | gelb |
| 50 | 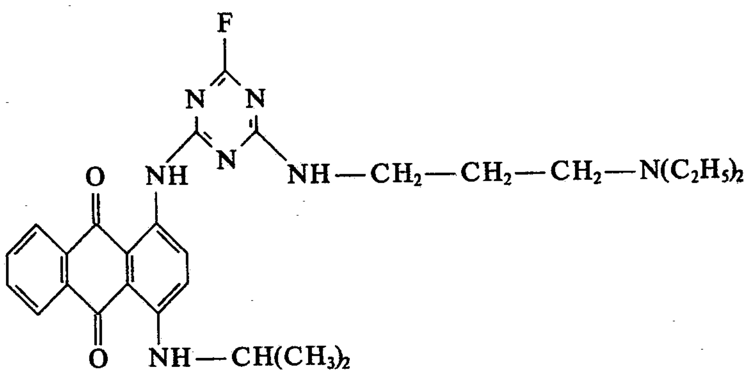 | blau |
| 51 | 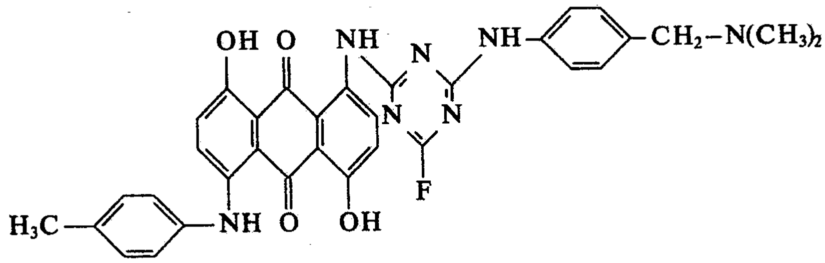 | blau |
| 52 | 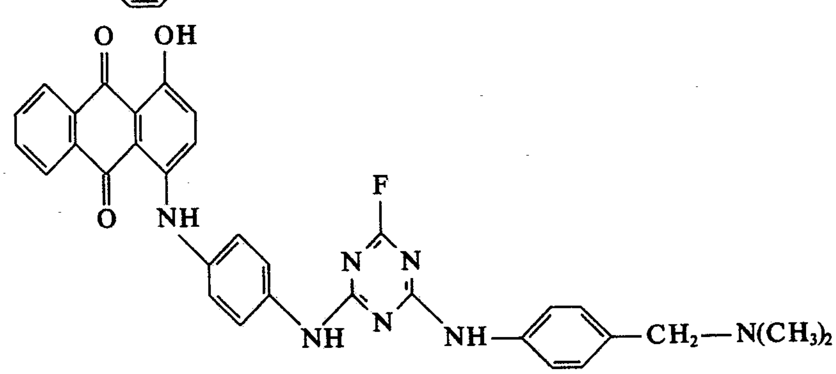 | blau |

Fortsetzung

| Beispiel Nr. | Farbstoff | Farbton |
| --- | --- | --- |
| 53 | 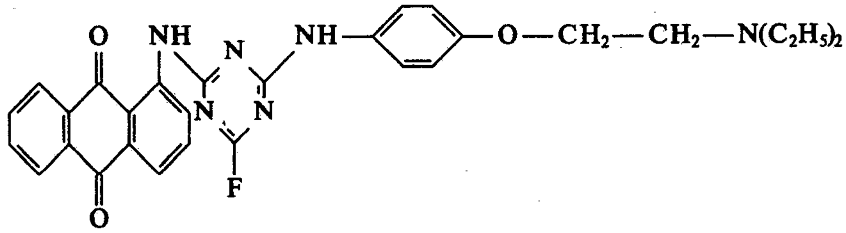 | gelb |
| 54 | 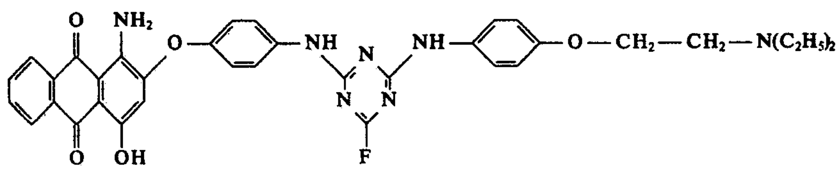 | rot |
| 55 | 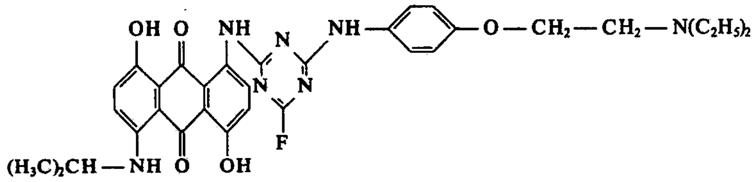 | blau |
| 56 | 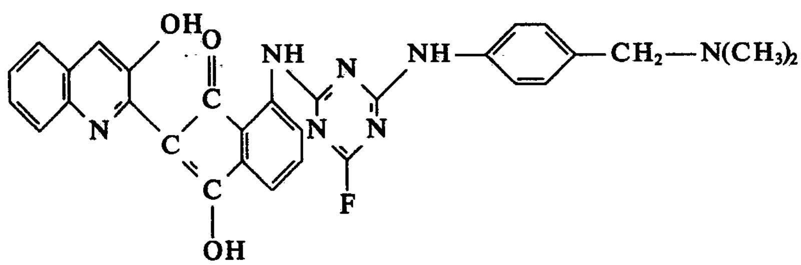 | gelb |
| 57 | 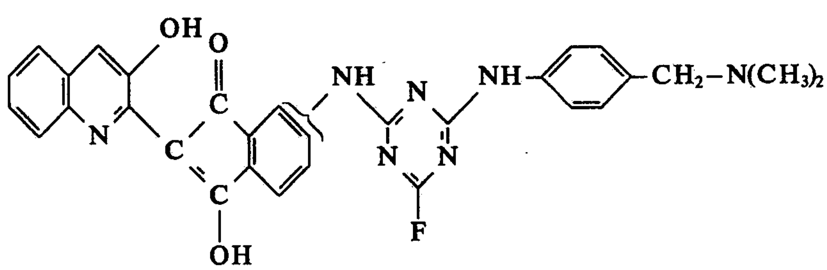 | gelb |
| 58 | 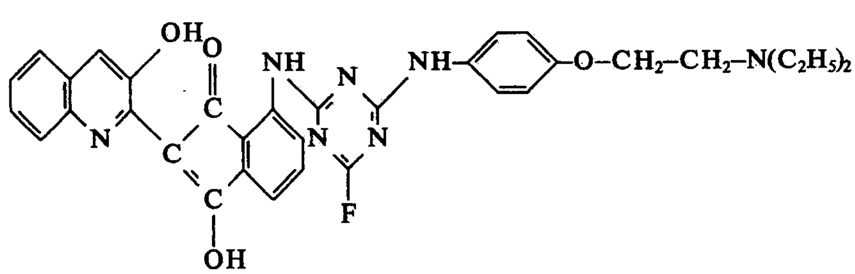 | gelb |

Fortsetzung

| Beispiel Nr. | Farbstoff | Farbton |
|---|---|---|
| 59 | 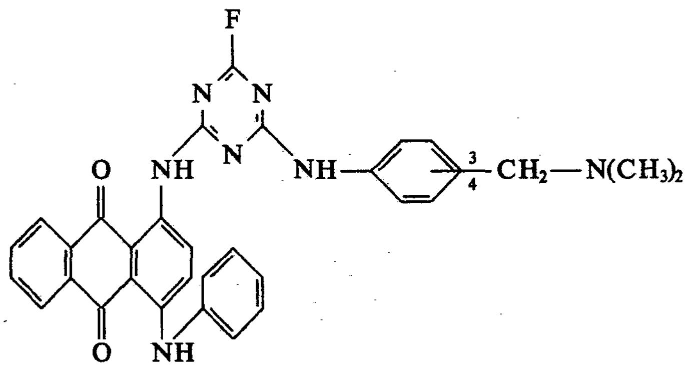 | blau |
| 60 | 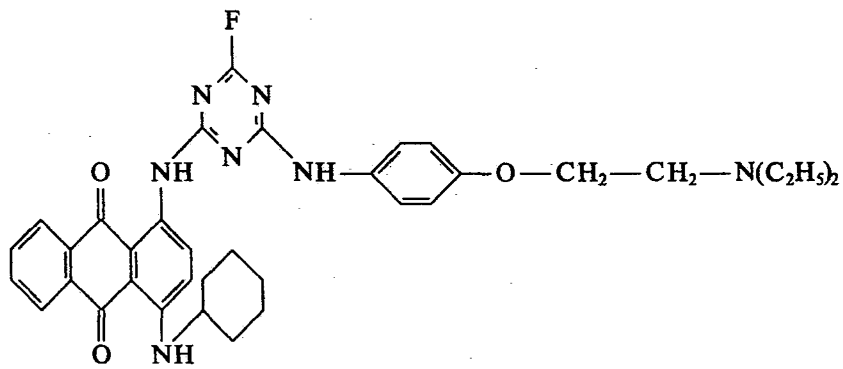 | blau |

Beispiel 61

16 g 4-Amino-2'-hydroxy-5'-methylazobenzol werden in 80 ml Toluol und 9,8 g N,N-Dimethylanilin suspendiert. Man läßt in 10 Minuten 10,4 g 2,4,6-Trifluortriazin bei 20° zu der Suspension tropfen und rührt noch 45 Minuten nach. Nach beendeter Kondensation werden im Laufe von 30 Minuten 14,4 g 1-Amino-3-dimethylaminopropan bei 20—25° zugetropft. Man rührt die erhaltene Suspension 2 Stunden nach, saugt den ausgefallenen Farbstoff ab, wäscht ihn mit Toluol und trocknet ihn bei 60° im Umluftschrank. Das Produkt entspricht der Formel

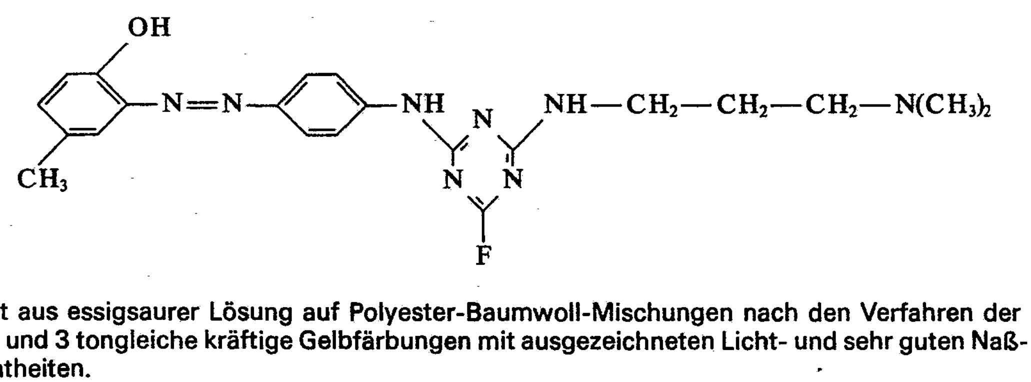

und gibt aus essigsaurer Lösung auf Polyester-Baumwoll-Mischungen nach den Verfahren der Beispiele 2 und 3 tongleiche kräftige Gelbfärbungen mit ausgezeichneten Licht- und sehr guten Naß- und Reibechtheiten.

Beispiel 62

12 g 4-Amino-4'-methoxy-2-methylazobenzol werden in 50 ml Nitrobenzol und 20 ml Dimethylformamid eingetragen. Man läßt zu der Mischung 7,5 g 2,4,6-Trifluortriazin in 20 Minuten zutropfen und rührt 1 Stunde bei 25—30° nach. Man saugt die erhaltenen gut ausgebildeten Kristalle des Difluortriazinylaminoazofarbstoffes ab, deckt sie zweimal mit Nitrobenzol ab, wäscht sie mit Petroläther und trocknet sie bei 50° im Umluftschrank. 7,2 g des erhaltenen Zwischenproduktes werden in 60 ml Toluol suspendiert. Man läßt bei 25—30° innerhalb von 30 Minuten 4,1 g 1-Amino-3-dimethylaminopropan

zutropfen und rührt 30 Minuten nach. Man saugt den erhaltenen Farbstoff der Formel

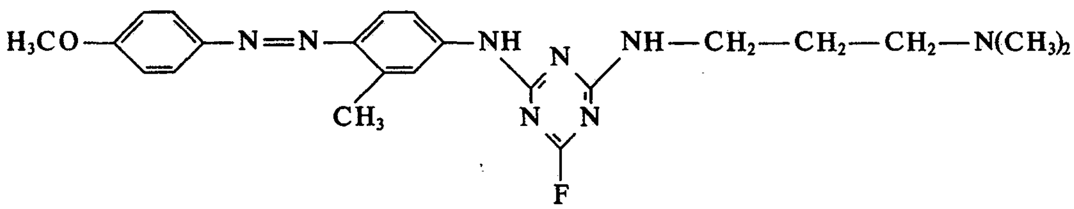

ab, wäscht ihn mit wenig Toluol und dann mit Petroläther und trocknet ihn im Umluftschrank bei 50°. Der Farbstoff liefert aus schwach saurer Lösung nach den Verfahren der Beispiele 2 und 3 auf Polyester-Baumwoll-Mischfasern tongleiche sehr licht-, naß- und reibechte Gelbfärbungen.

Beispiel 63

14 g 1-(4'-Amino-2-nitrophenylazo)-2-hydroxynaphthalin werden in 120 ml Nitrobenzol und 5,8 g N,N-Dimethylanilin suspendiert. Man läßt in 10 Minuten 6,3 g 2,4,6-Trifluortriazin bei 20° zutropfen. Nach einstündigem Nachrühren bis zur beendeten Umsetzung läßt man dann 8,2 g 1-Amino-3-dimethylaminopropan innerhalb von 30 Minuten bei 20—25° zutropfen und rührt 2—3 Stunden nach. Im Laufe des Eintropfens der Aminokomponente und des Nachrührens wechselt die Farbe der Suspension von einem bräunlicheren zu einem klaren helleren Rotton. Man saugt den ausgefällten Farbstoff ab, wäscht ihn mit Toluol und Petroläther und trocknet ihn im Umluftschrank bei 50°. Der Farbstoff der Formel

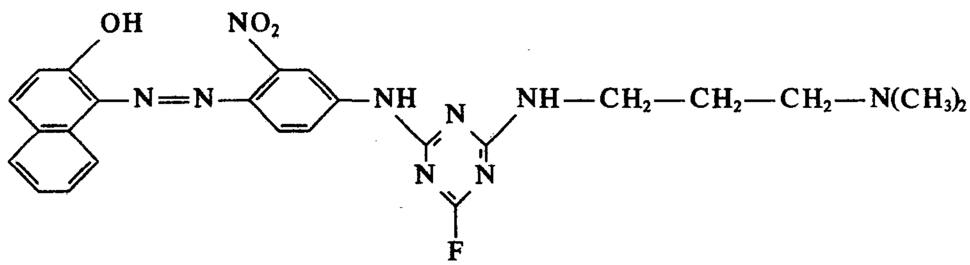

färbt Polyester-Baumwoll-Mischungen aus essigsaurer Lösung nach den Verfahren der Beispiele 2 und 3 in roten Tönen gleichmäßig und mit sehr guten Echtheiten an.

Analog zu den obigen Beispielen können weitere, in Tabelle II aufgeführte Azofarbstoffe hergestellt werden, die auf Polyester/Baumwoll-Mischfasern mit der Verfahrensweise der Beispiele 2 und 3 waschechte, gleichmäßige Färbungen und Drucke in den angegebenen Nuancen ergeben.

Tabelle II

| Bsp. Nr. | Farbstoff | Farbton |
|---|---|---|
| 64 | 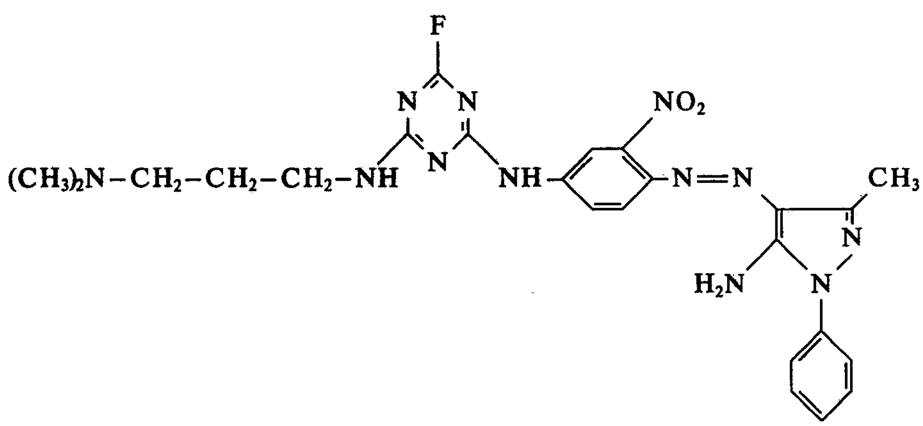 | orange |

Fortsetzung

| Bsp. Nr. | Farbstoff | Farbton |
|---|---|---|
| 65 | 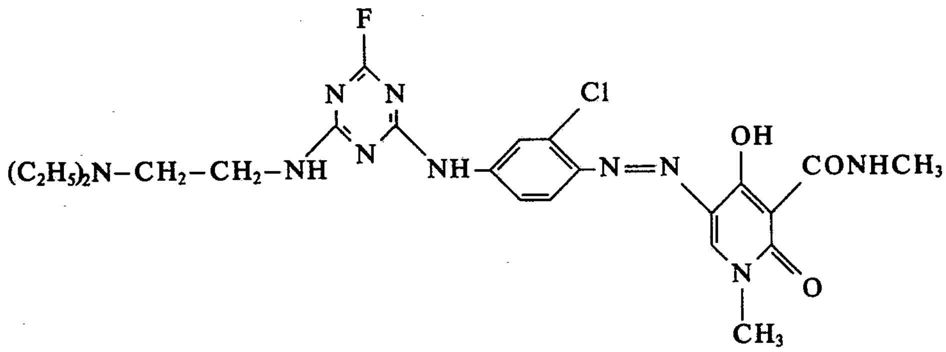 | gelb |
| 66 | 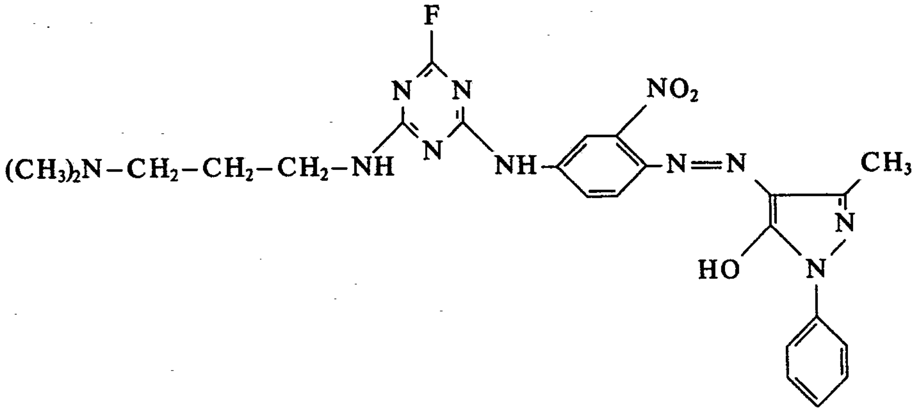 | orange |
| 67 | 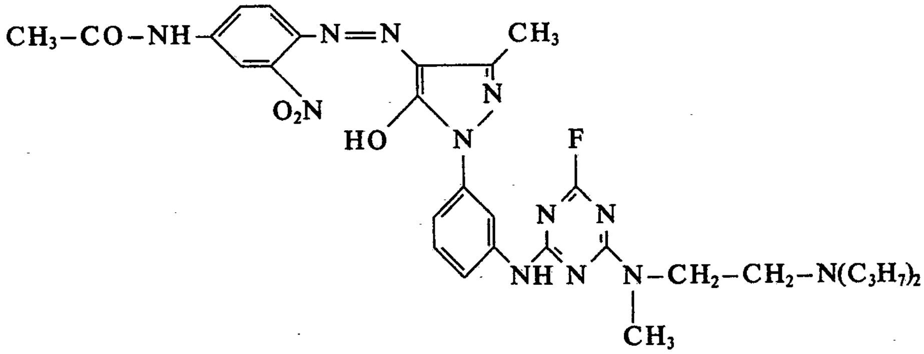 | orange |
| 68 | 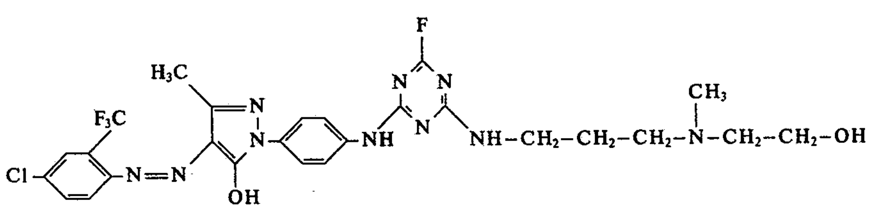 | gelb |

Fortsetzung

| Bsp. Nr. | Farbstoff | Farbton |
|---|---|---|
| 69 | 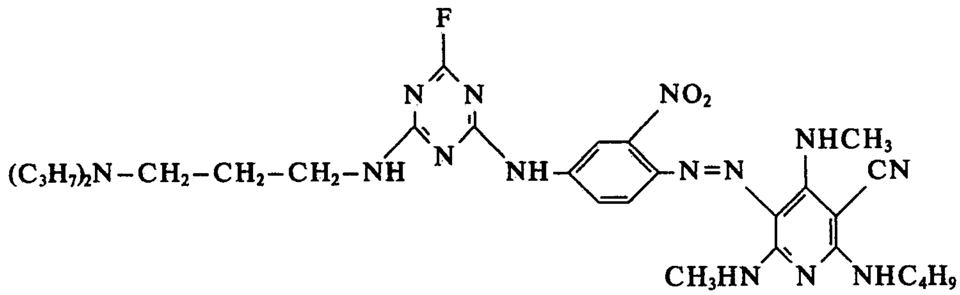 | orange |
| 70 | 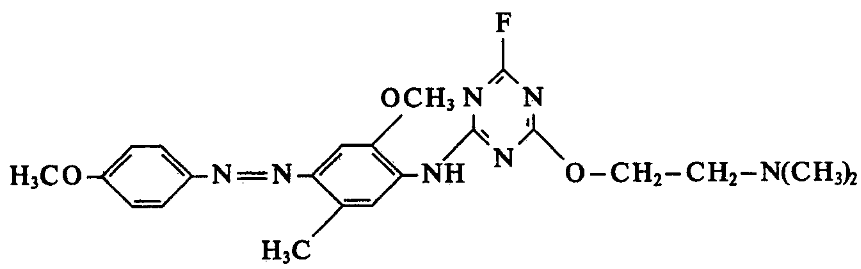 | gelb |
| 71 | 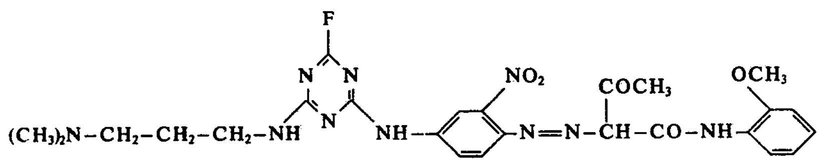 | gelb |
| 72 | 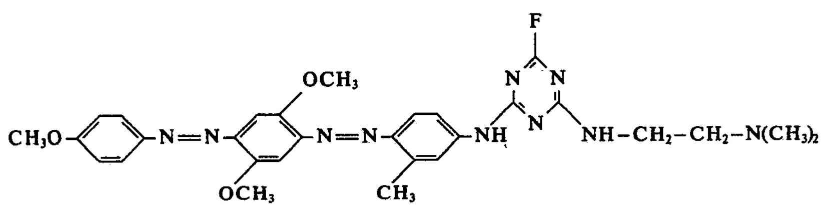 | braun |
| 73 | 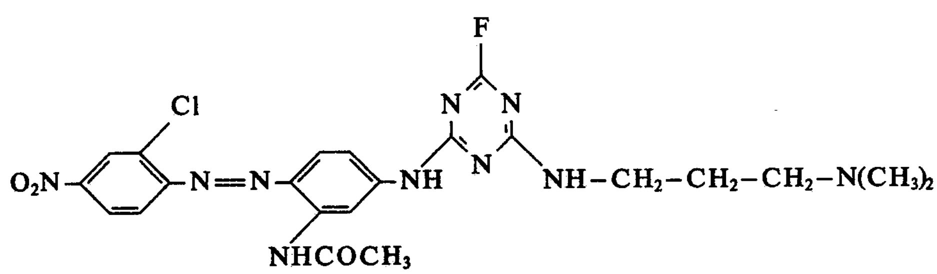 | gelb |
| 74 | 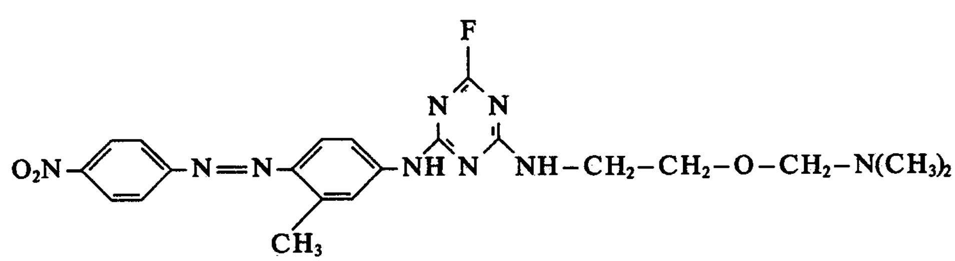 | gelb |

Fortsetzung

| Bsp. Nr. | Farbstoff | Farbton |
|---|---|---|
| 75 | 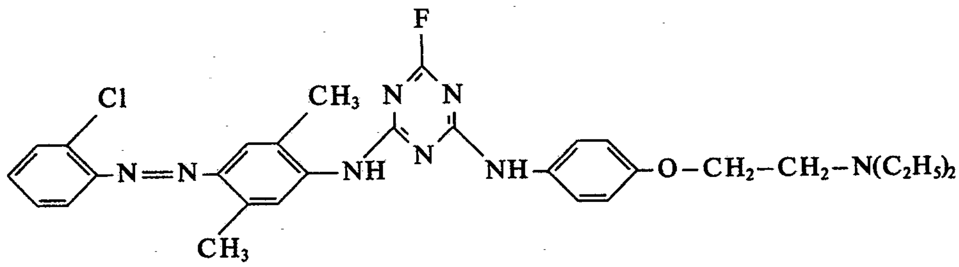 | gelb |
| 76 | 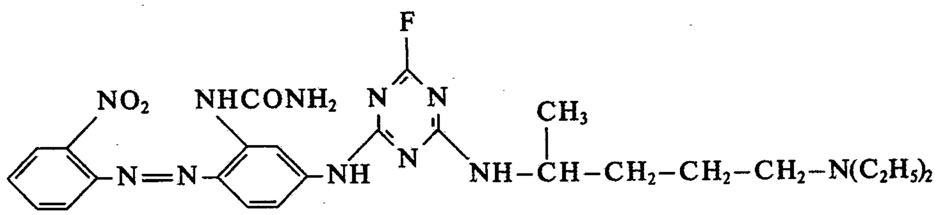 | gelb |
| 77 | 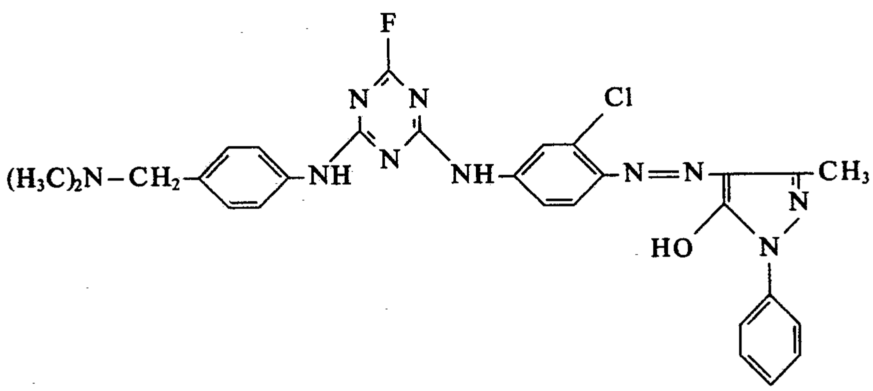 | gelb |
| 78 | 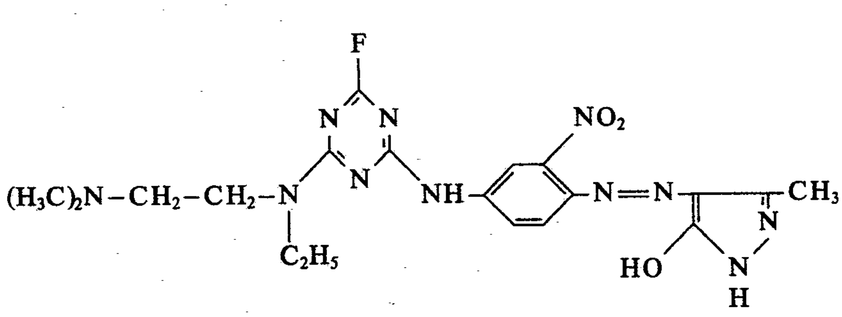 | gelb |
| 79 | 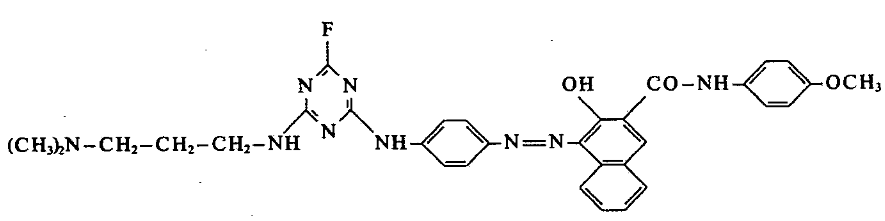 | rot |

Fortsetzung

| Bsp. Nr. | Farbstoff | Farbton |
|---|---|---|
| 80 | 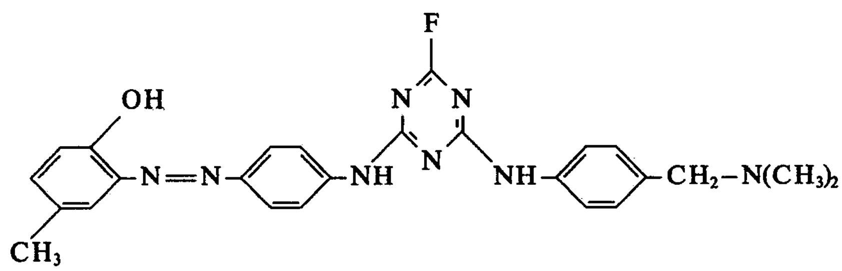 | gelb |
| 81 | 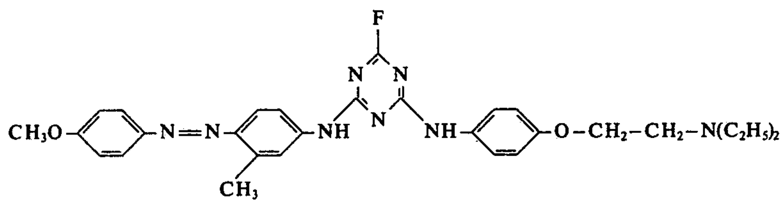 | gelb |
| 82 | 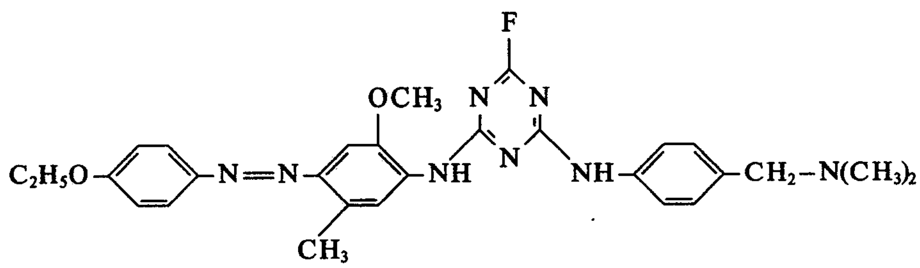 | gelb |
| 83 | 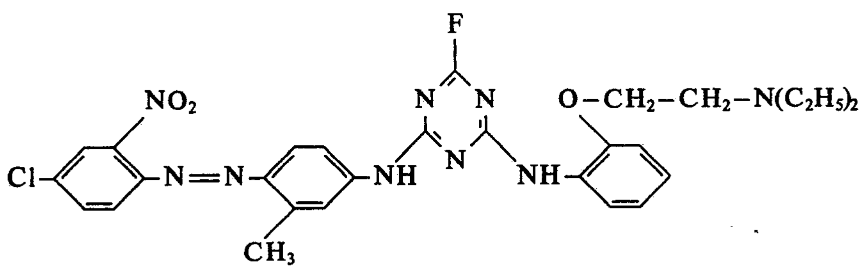 | gelb |
| 84 | 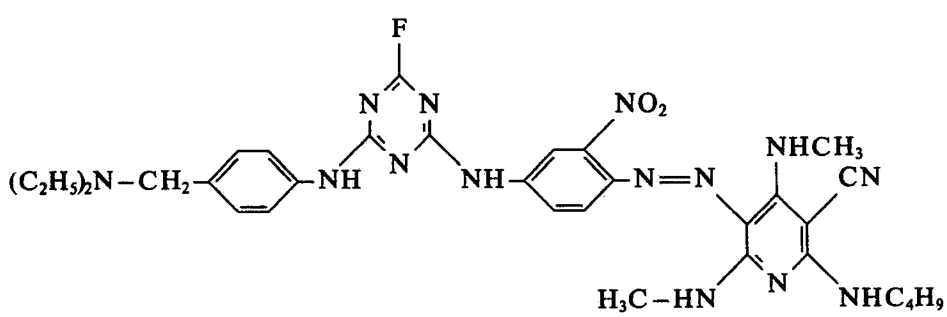 | orange |

Fortsetzung

| Bsp. Nr. | Farbstoff | Farbton |
|---|---|---|
| 85 | 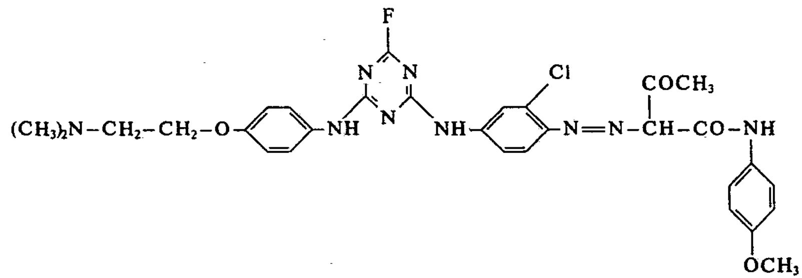 | gelb |
| 86 | 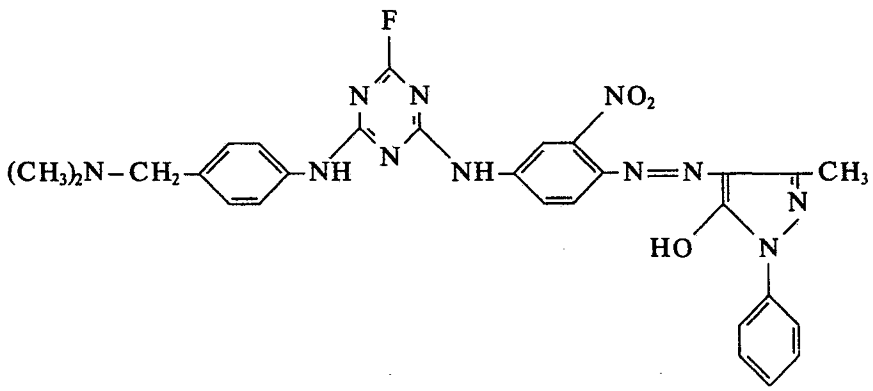 | gelb |

## Beispiel 87

14 g 4'-Amino-3-nitro-diphenylamin-1-sulfonsäure-N,N-dimethylamid werden in 60 ml Dimethylformamid gelöst. Nach Abkühlung der Lösung auf 0—5° läßt man 6,3 g 2,4,6-Trifluortriazin in 5 Minuten zutropfen und rührt nach 30 Minuten bis zur Beendigung der Kondensation nach. 8,6 g 1-Amino-3-dimethylaminopropan werden innerhalb von 30 Minuten bei 0—5° zugetropft. Man läßt anschließend die Temperatur auf 20° ansteigen. Nach halbstündigem Nachrühren ist die Umsetzung beendet. Man läßt nun die erhaltene Lösung in 1500 ml 10%ige Natriumchloridlösung bei 0—5° eintropfen. Man saugt den ausgefallenen Niederschlag ab, verrührt ihn nochmals mit kalter 10%iger Natriumchloridlösung, saugt erneut ab, wäscht mit etwas kalter 10%iger Natriumchloridlösung nach und trocknet ihn bei 60° im Umluftschrank. Der erhaltene Farbstoff entspricht der Formel

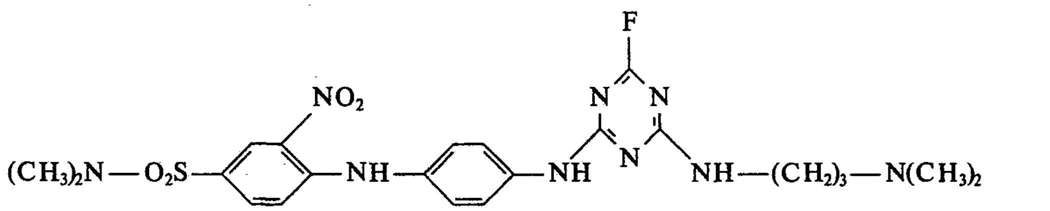

und färbt nach den Verfahren der Beispiele 2 und 3 Polyester-Baumwoll-Mischungen aus essigsaurer Lösung in gleichmäßigen Gelbtönen mit guten Echtheiten.

In gleicher Weise lassen sich mit den in Tabelle IV aufgeführten analog hergestellten Nitrofarbstoffen tongleiche gelbe Färbungen und Drucke auf Polyester-Baumwoll-Mischungen nach den in den Beispielen 2 und 3 angegebenen Verfahren erzielen.

Tabelle IV

| Bsp. Nr. | Farbstoff |
|---|---|
| 88 | 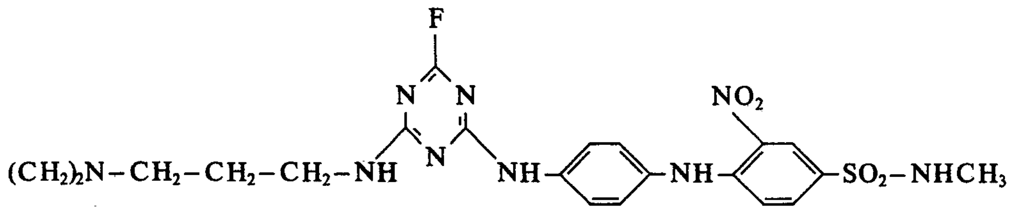 |
| 89 | 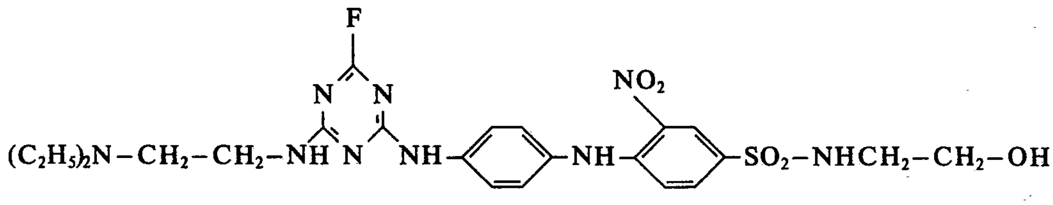 |
| 90 | 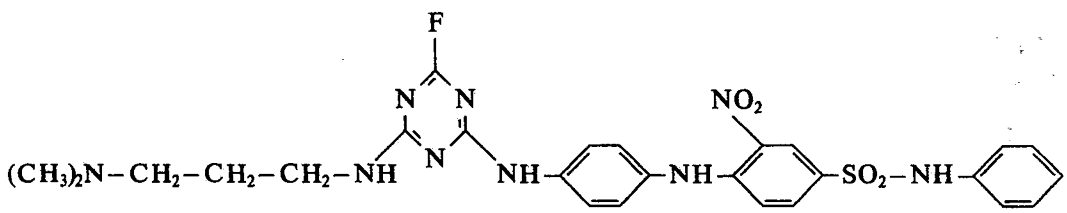 |
| 91 | 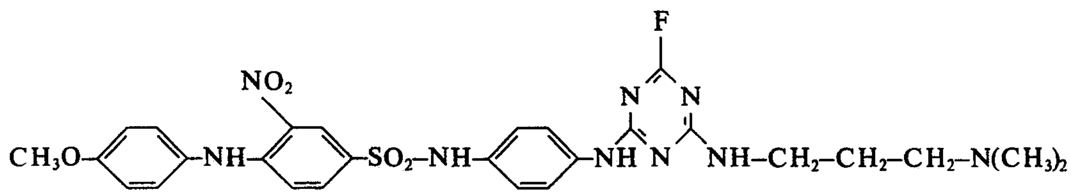 |
| 92 | 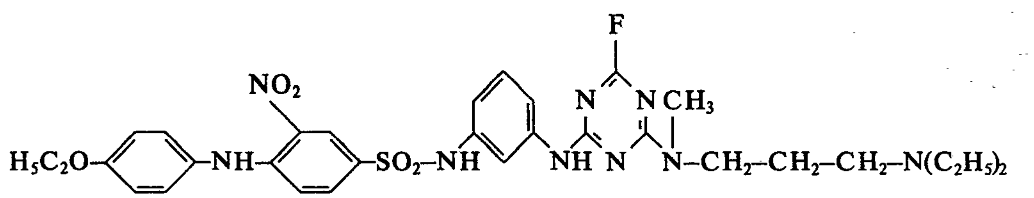 |

Beispiel 93

10 g des nach Beispiel 6 hergestellten Zwischenproduktes der Formel

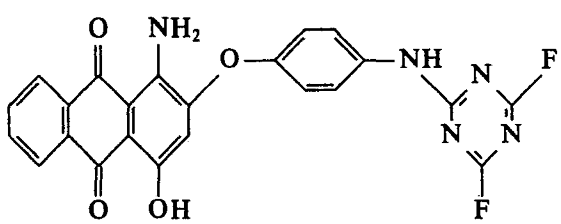

werden in 100 ml Toluol suspendiert.

Man läßt bei 5–10° 2,8 g 1,4-Diaminobutan in 30 Minuten zutropfen und rührt 1 Stunde nach. Man saugt die Fällung ab, wäscht sie mit Toluol und anschließend mit Petroläther. Nach Trocknung bei 50° im Umluftschrank erhält man einen Farbstoff, der im wesentlichen der Formel

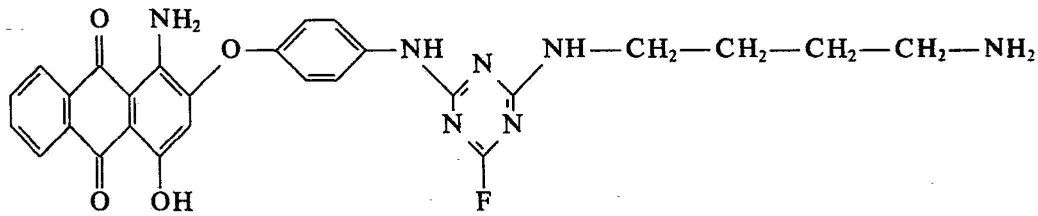

entspricht und aus essigsaurer Lösung nach den Verfahren der Beispiele 2 und 3 auf Polyester-Baumwoll-Mischgewebe gleichmäßige, naßechte rote Färbungen ergibt.

Einen ähnlichen Farbstoff erhält man, wenn man anstelle des 1,4-Diaminobutans 1,8 g 1,2-Diaminoäthan einsetzt.

## Beispiel 94

16 g 1-Amino-4-(3'-amino-phenylamino)-2-bromanthrachinon werden in 80 ml Toluol und 5,4 g N,N-Dimethylanilin suspendiert. Man läßt bei 20° 6,0 g 2,4,6-Trifluortriazin in 10 Minuten zutropfen und rührt noch 45 Minuten nach. Das Farbstoffzwischenprodukt ist vollständig ausgefallen.

Zu der Suspension läßt man 8,3 g 1-Amino-3-dimethyl-aminopropan in 30 Minuten bei 20–25° zutropfen und rührt 2 Stunden zur Beendigung der Kondensation nach. Der suspendierte Farbstoff wird abgesaugt, mit wenig Toluol und anschließend mit Petroläther gewaschen und bei 60° im Umluftschrank getrocknet. Der erhaltene Farbstoff der Formel

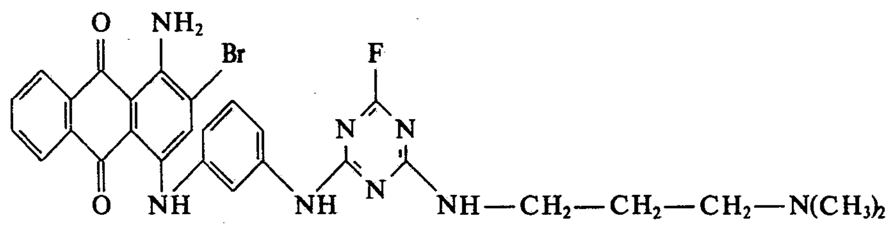

färbt Polyester-Baumwoll-Mischgewebe aus schwach sauren Lösungen nach den Verfahren der Beispiele 2 und 3 gleichmäßig in licht-, naß- und reibechten Blautönen an.

Einen ähnlichen Farbstoff erhält man, wenn man anstelle des 1-Amino-3-dimethylaminopropans äquivalente Mengen 1-Amino-3-methylaminopropan einsetzt.

## Beispiel 95

19,2 g 1-Amino-4-(3-dimethylamino-1-propylamino)-anthrachinon (hergestellt durch Umsetzung von 1-Amino-4-bromanthrachinon-2-sulfonsäure und 1-Amino-3-dimethylaminopropan und anschließender reduktiver Eliminierung der Sulfonsäuregruppe) werden in 150 ml Toluol und 15 ml Dimethylformamid eingetragen. Zu der Mischung werden 5,6 g 2,4,6-Trifluortriazin in 5 Minuten zugetropft. Dabei darf die Temperatur auf 30–35° ansteigen. Zur Beendigung der Kondensation rührt man 30 Minuten nach.

Man trägt in das Reaktionsgemisch nun 11,4 g Phenol ein und läßt 9,1 g Triäthylamin zutropfen. Anschließend hält man die Temperatur 30 Minuten auf 30–35° und weiter 30 Minuten auf 50°. Nach beendeter Umsetzung wird auf 20° abgekühlt, der ausgefallene Farbstoff abgesaugt, der Filterkuchen mit Toluol gewaschen und bei 60° im Umluftschrank getrocknet. Der erhaltene Farbstoff der Formel

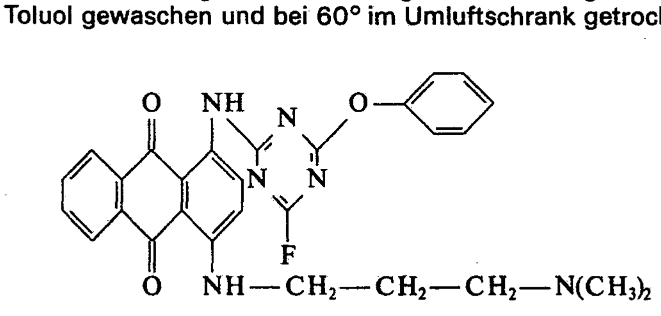

ist in verdünnter Essigsäure löslich und färbt nach den Verfahren der Beispiele 2 und 3 Polyester-Baumwoll-Mischungen sehr gleichmäßig in naß- und reibechten Blautönen.

Analog lassen sich weitere, in Tabelle VI aufgeführte Farbstoffe herstellen, die Polyester-Baumwoll-Mischungen aus essigsaurer Lösung nach den Verfahren der Beispiele 2 und 3 in den angegebenen Farbtönen gleichmäßig anfärben.

Tabelle V

| Bsp. Nr. | Farbstoff | Farbton |
|---|---|---|
| 96 | 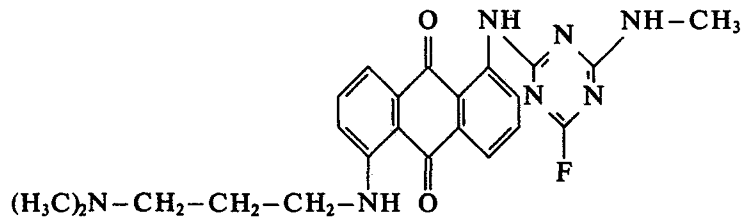 | rot |
| 97 | 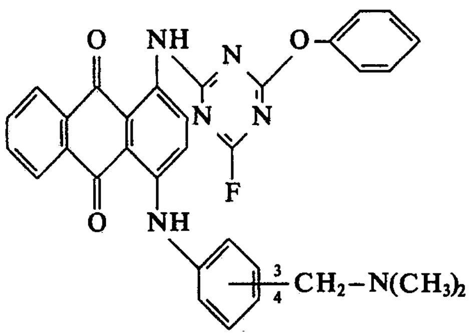 | blau |
| 98 | 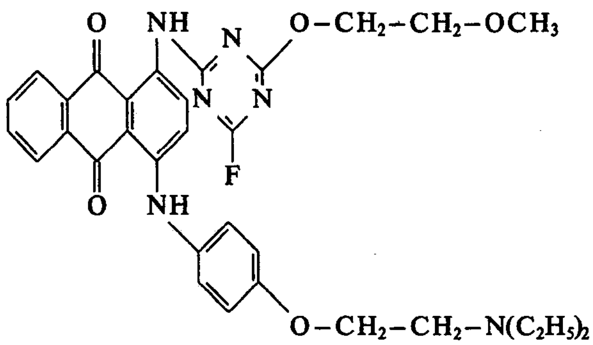 | blau |
| 99 | 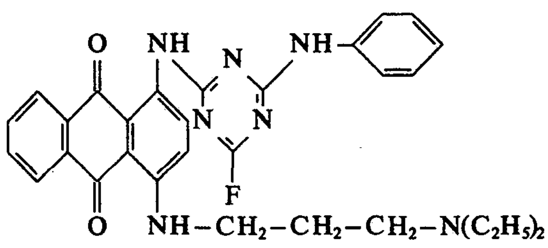 | blau |
| 100 | 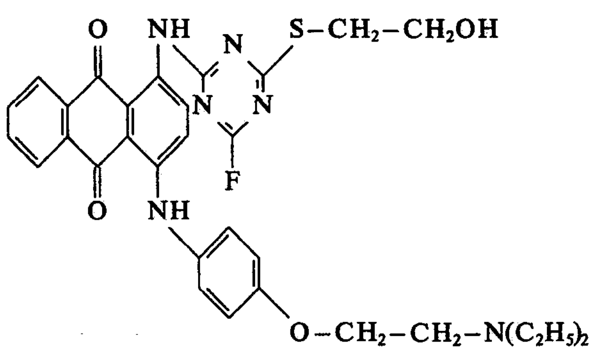 | blau |

Fortsetzung

| Bsp. Nr. | Farbstoff | Farbton |
|---|---|---|
| 101 | 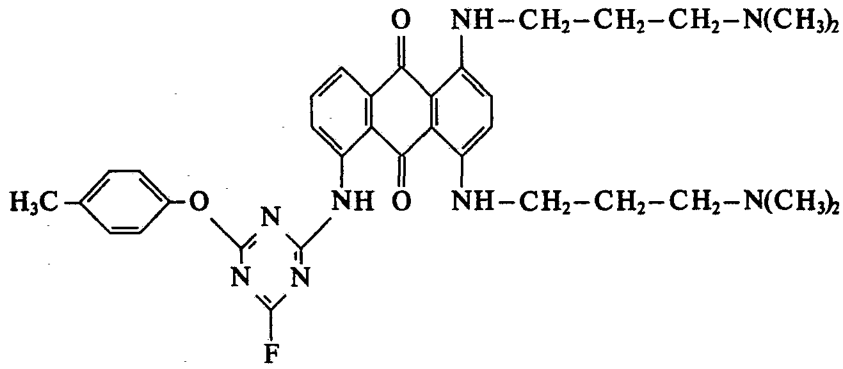 | blau |
| 102 | 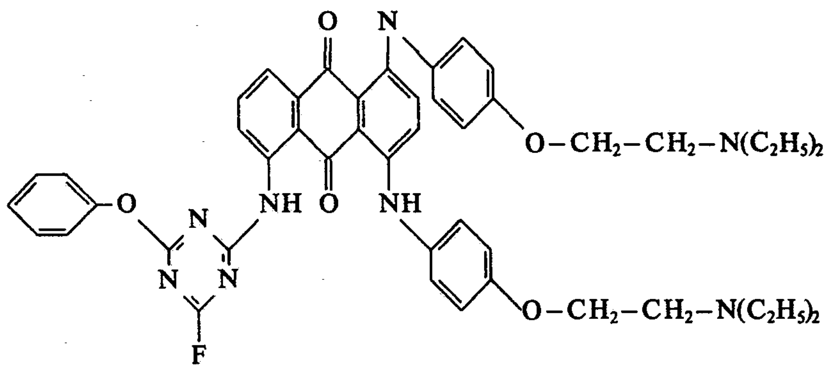 | grün |

## Beispiel 103

5 g gebleichter Zellstoff werden in 200 ml Wasser dispergiert. Man setzt eine Lösung von 0,05 g Farbstoff des Beispiels 6 in 2 ml 5%iger Essigsäure zu, rührt einige Minuten bei 20° und verdünnt mit 500 ml Wasser. Anschließend setzt man 10 ml einer 1%igen Harzleimlösung und 15 ml einer 1%igen Aluminiumsulfatlösung zu. Die erhaltene Suspension wird 15 Minuten nachgerührt. Man saugt die gefärbte Masse auf einem Blattbildner ab. Nach dem Trocknen liegt ein blaustichig rot gefärbtes Papierblatt vor.

## Beispiel 104

17,0 g 4-Methylamino-2'-hydroxy-5'-methylazobenzol werden in 80 ml Toluol und 9,8 g N,N-Dimethylanilin suspendiert bzw. gelöst. Innerhalb von 10 Minuten läßt man 10,5 g 2,4,6-Trifluortriazin bei 20° zutropfen und rührt 45 Minuten nach. Wenn die Kondensation beendet ist, läßt man 14,2 g N-Methylpiperazin in 30 Minuten zutropfen, rührt die erhaltene Suspension bei 35—40° 2 Stunden nach, saugt den ausgefallenen Farbstoff bei 20° ab, wäscht ihn mit Toluol und trocknet ihn bei 60° im Umluftschrank. Das Produkt entspricht der Formel

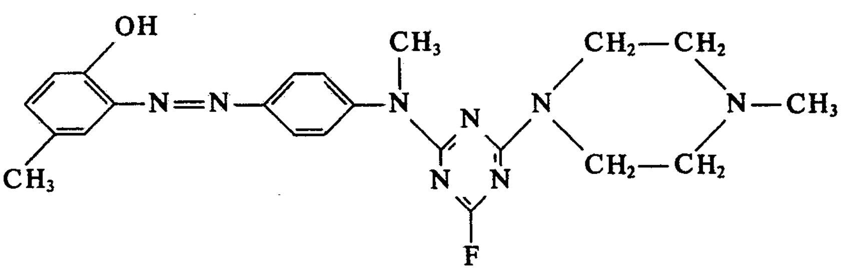

und gibt aus essigsaurer Lösung auf Polyester-Baumwoll-Mischungen nach den Verfahren der Beispiele 2 und 3 tongleiche kräftige Gelbfärbungen mit guten Licht-, Naß- und Reibechtheiten.

Nach dem Verfahren des Beispiels 103 ergibt der Farbstoff kräftige gelbe Papierfärbungen.

### Beispiele 105–107

Nach den gleichen Verfahrensweisen, wie sie in den Beispielen 61–63 beschrieben sind, lassen sich auch folgende basische Fluortriazin-azofarbstoffe gewinnen, die auf Polyester-Baumwoll-Mischungen gemäß den Beispielen 2 und 3 ebenfalls licht-, naß- und reibechte Färbungen ergeben.

| Bsp. Nr. | Farbstoff | Farbton |
|---|---|---|
| 105 | 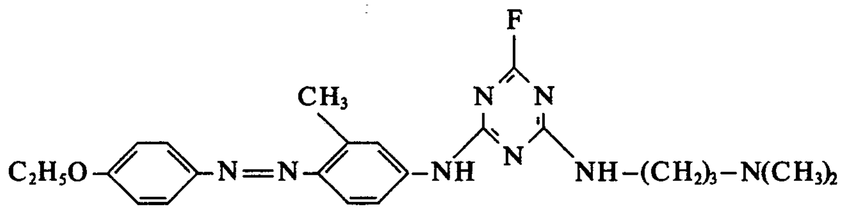 | gelb |
| 106 | 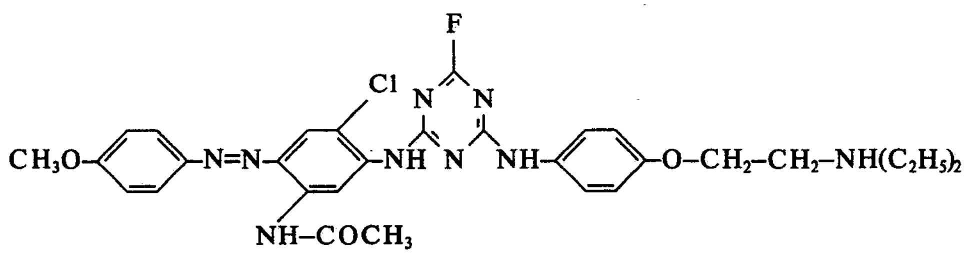 | gelb |
| 107 | 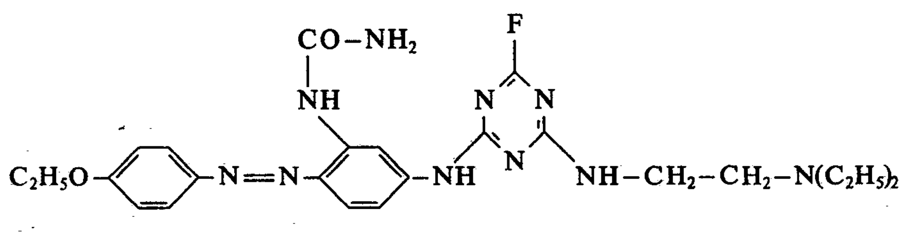 | gelb |

**Patentansprüche**

1. Reaktivfarbstoffe der Formel

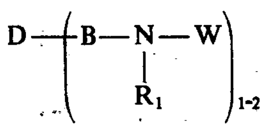

mit

D = Rest eines von anionischen Gruppen freien organischen Farbstoffes, der frei von basischen Gruppen ist,
B = direkte Bindung zu einem Ring-C-Atom von D,
$R_1$ = H, $CH_3$,
W = Fluortriazinylrest mit einer der folgenden Gruppen der Formeln

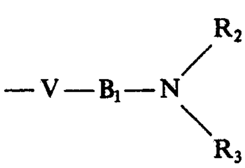

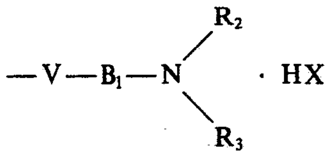

und

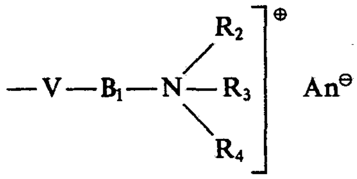

mit

V = 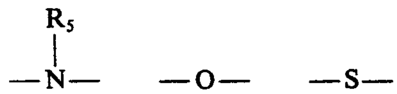

oder direkte Bindung,

$B_1$ = Brückenglied, insbesondere $C_2$—$C_8$-Alkylen, gegebenenfalls durch Heteroatome, insbesondere —O— unterbrochen, Aralkylen, Alkarylen,

$R_2$—$R_5$ = H, Alkyl, wobei $R_2$ und $R_5$ zusammen auch Alkylen bedeuten können,

$An^{\ominus}$ = Anion,

HX = organische oder anorganische Säure.

2. Reaktivfarbstoffe der Formel

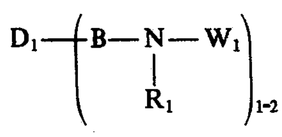

mit

$D_1$ = Rest eines von anionischen Gruppen freien organischen Farbstoffs mit einer der folgenden Gruppen der Formeln

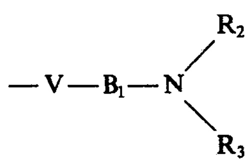

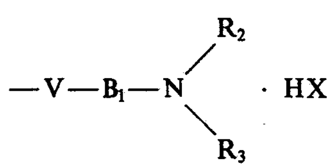

und

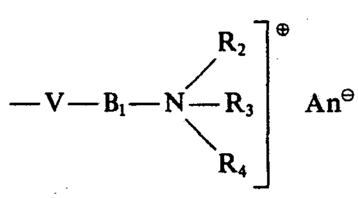

mit

V = 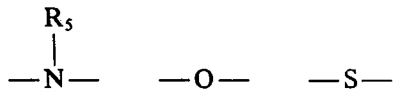

oder direkte Bindung,

$B_1$ = Brückenglied, insbesondere $C_2$—$C_8$-Alkylen, gegebenenfalls durch Heteroatome, insbesondere —O— unterbrochen, Aralkylen, Alkarylen,

$R_2$—$R_5$ = H, Alkyl, wobei $R_2$ und $R_5$ zusammen auch Alkylen bedeuten können,

$An^\ominus$ = Anion,

HX = organische oder anorganische Säure,

$R_1$ = H, $CH_3$,

$W_1$ = Fluortriazinylrest, der frei von basischen Gruppen ist,

B = direkte Bindung zu einem Ring-C-Atom von $D_1$.

3. Farbstoff gemäß Anspruch 1) mit einem Fluortriazinylrest, der einen Rest

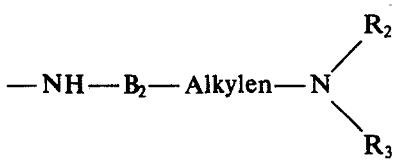

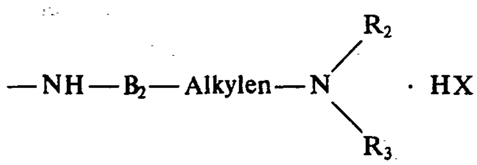

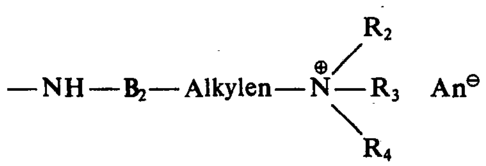

mit

$B_2$ = direkte Bindung, Phenylen, Phenylen—O—,

Alkylen = $C_2$—$C_8$-Alkylen.

enthält.

4. Verwendung der Farbstoffe der Ansprüche 1—3 für das Färben und Bedrucken synthetischer Fasermaterialien und cellulosehaltiger Fasermaterialien.

5. Verwendung der Farbstoffe der Ansprüche 1—3 für das einstufige Färben und Bedrucken von Mischfasern aus Cellulose und synthetischen Fasern, insbesondere Baumwolle-Polyester-Mischfasern.

**Claims**

1. Reactive dyestuffs of the formula

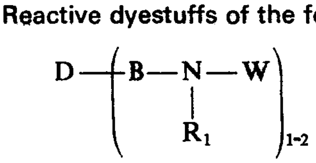

in which

D = the radical of an organic dyestuff which is free from anionic groups and is free from basic groups,

B = a direct bond to a ring C atom of D,

$R_1$ = H or $CH_3$,

W = a fluortriazinyl radical containing one of the following groups of the formulae

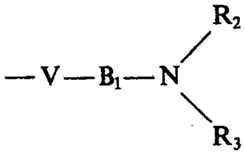

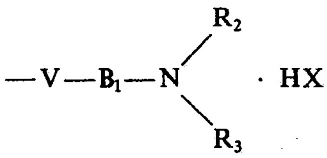

and

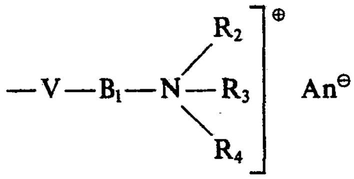

in which

V = 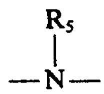 —O— —S— or a direct bond,

$B_1$ = a bridge member, in particular $C_2$—$C_8$-alkylene, optionally interrupted by heteroatoms, in particular —O—, aralkylene or alkarylene,

$R_2$—$R_5$ = H or alkyl, it also being possible for $R_2$ and $R_5$ together to denote alkylene,

$An^{\ominus}$ = an anion and

HX = an organic or inorganic acid.

2. Reactive dyestuffs of the formula

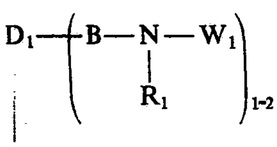

in which

$D_1$ = the radical of an organic dyestuff which is free from anionic groups and contains one of the following groups of the formulae

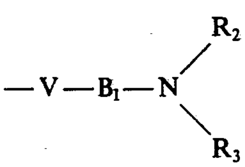

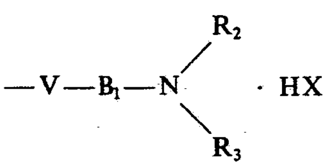

and

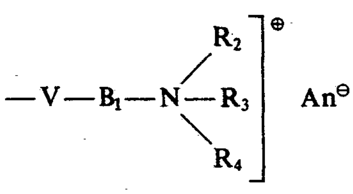

in which

V = 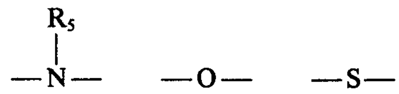

or a direct bond,

$B_1$ = a bridge member, in particular $C_2$—$C_8$-alkylene, optionally interrupted by heteroatoms, in particular —O—, aralkylene or alkarylene,

$R_2$—$R_5$ = H, alkyl, it also being possible for $R_2$ and $R_5$ together to denote alkylene,

$An^\ominus$ = an anion,

HX = an organic or inorganic acid,

$R_1$ = H or $CH_3$,

$W_1$ = a fluorotriazinyl radical which is free from basic groups, and

B = a direct bond to a ring C atom of $D_1$.

3. Dyestuff according to Claim 1) containing a fluortriazinyl radical which contains a radical

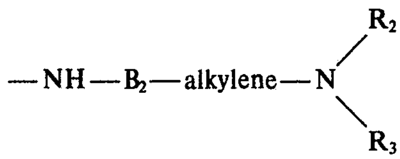

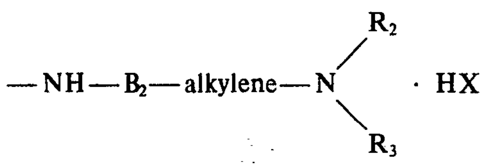

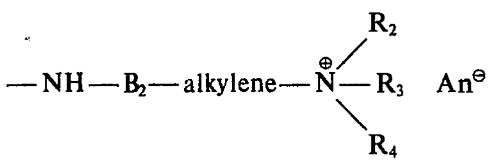

in which

$B_2$ = a direct bond, phenylene or phenylene —O— and

alkylene = $C_2$—$C_8$-alkylene.

4. Use of the dyestuffs of Claims 1—3 for dyeing and printing synthetic fibre materials and fibre materials containing cellulose.

5. Use of the dyestuffs of Claims 1—3 for dyeing and printing fibre blends of cellulose and synthetic fibres, in particular cotton/polyester fibre blends, in a single-stage process.

**Revendications**

1. Colorants réactifs de formule

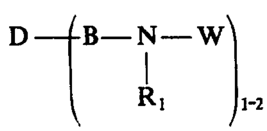

avec

D = reste d'un colorant organique dépourvu de groupes anioniques, qui ne porte pas de groupes basiques,

B = liaison directe avec un atome de carbone du noyau de D,

$R_1$ = H, $CH_3$,

W = reste fluorotriazinyle présentant l'un des groupes suivants de formules

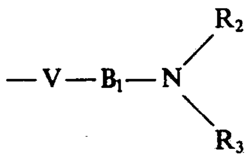

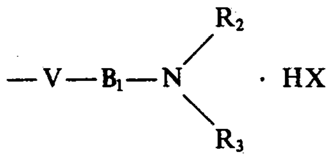

et

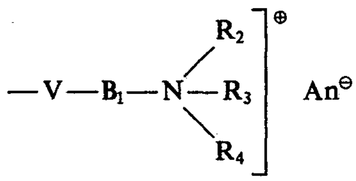

avec

V = 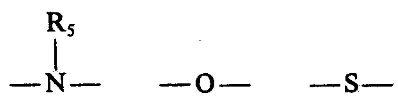

ou liaison directe,

$B_1$ = élement de pontage, notamment alkyléne en $C_2$ à $C_8$, éventuellement interrompu par des hétéroatomes, notamment —O—, aralkylène, alkarylène,

$R_2$—$R_5$ = H, alkyle, $R_2$ et $R_5$ pouvant aussi désigner ensemble un groupe alkylène,

$An^{\ominus}$ = anion,

HX = acide organique ou inorganique.

2. Colorants réactifs de formule

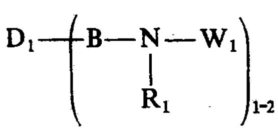

avec

$D_1$ = reste d'un colorant organique dépourvu de groupes anioniques, présentant l'un des groupes suivants de formules

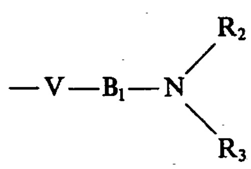

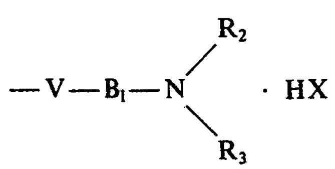

et

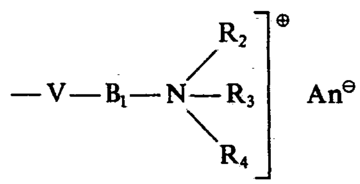

avec

V = 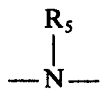 —O— —S—

ou liaison directe,

| | | |
|---|---|---|
| $B_1$ | = | élément de pontage, notamment alkylène en $C_2$ à $C_8$, éventuellement interrompu par des hétéroatoms, en particulier —O—, aralkylène, alkarylène, |
| $R_2$–$R_5$ | = | H, alkyle, $R_2$ et $R_5$ pouvant aussi désigner ensemble un groupe alkylène, |
| $An^{\ominus}$ | = | anion, |
| HX | = | acide organique ou inorganique, |
| $R_1$ | = | H, $CH_3$, |
| $W_1$ | = | reste fluorotriazinyle qui est dépourvu de groupes basiques, |
| B | = | liaison directe avec un atome de carbone du noyau de $D_1$. |

3. Colorant suivant la revendication 1, présentant un reste fluorotriazinyle qui comprend un reste

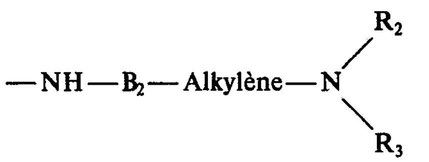

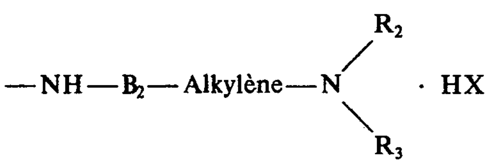

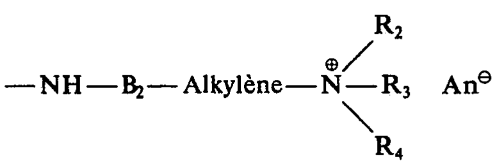

avec

| | | |
|---|---|---|
| $B_2$ | = | liaison directe, –phénylène, phénylène–O–, |
| alkylène | = | alkylène en $C_2$ à $C_8$. |

4. Utilisation des colorants suivant les revendications 1–3 pour la teinture et l'impression de matières fibreuses synthétiques et de matières fibreuses contenant de la cellulose.

5. Utilisation des colorants suivant les revendications 1–3 pour la teinture et l'impression en une seule étape de fibres mixtes de cellulose et de fibres synthétiques, notamment des fibres mixtes de coton et polyester.